# EUROPEAN PATENT APPLICATION

(11) **EP 4 750 127 A1**
(43) Date of publication of application: **27.05.2026**
(21) Application number: 24850856.6
(22) Date of filing: 30.07.2024
(51) Int. Cl.: H04W 24/02, H04W 28/14

(54) **INFORMATION INTERACTION METHOD AND APPARATUS, AND READABLE STORAGE MEDIUM**

(30) Priority: 06.08.2023 CN 202310983173
(71) Applicant: HUAWEI TECHNOLOGIES CO., LTD., Shenzhen 518129 (CN)
(72) Inventor: GUO, Tao, Shenzhen, Guangdong 518129 (CN); WU, Yizhuang, Shenzhen, Guangdong 518129 (CN)
(74) Representative: Maiwald GmbH
(86) International application number: PCT/CN2024/108415
(87) International publication number: WO 2025/031208

(57) **Abstract**

This application relates to the field of communication technologies, and in particular, to an information exchange method, an apparatus, and a readable storage medium. The method includes: An ADRF receives a model storage request sent by an NWDAF containing MTLF, where the request is used to store a model, and the request does not include an allowed NFc list corresponding to the model. The ADRF generates an allowed NFc list for the model, where the allowed NFc list includes an NF instance identifier of a second network element, to facilitate use in subsequent retrieval by an NWDAF containing AnLF. The ADRF returns a model storage response. According to this application, a model storage solution can be optimized, and when the NWDAF containing MTLF does not specify an allowed NFc list, model get permissions at two ends that are the ADRF and the NWDAF containing MTLF can be aligned (or synchronized).

## Description

This application claims priority to Chinese Patent Application No. 202310983173.9, filed with the China National Intellectual Property Administration on August 6, 2023 and entitled "INFORMATION EXCHANGE METHOD, APPARATUS, AND READABLE STORAGE MEDIUM", which is incorporated herein by reference in its entirety.

### TECHNICAL FIELD

This application relates to the field of communication technologies, and in particular, to an information exchange method, an apparatus, and a readable storage medium.

### BACKGROUND

A network data analytics function (network data analytics function, NWDAF) network element has functions such as data collection, model training, data analytics, and model inference. An NWDAF network element containing analytics logical function (analytics logical function, AnLF) may be configured to infer and export analytics information, and expose an analytics service. An NWDAF network element containing model training logical function (model training logical function, MTLF) may be configured to train a machine learning (machine learning, ML) model or an artificial intelligence (artificial intelligence, AI) model, and expose a new training service, for example, provide a trained AI model or ML model. An analytics data repository function (analytics data repository function, ADRF) network element may provide AI/ML model storage, deletion, and retrieval services.

The AI/ML model may be stored in the ADRF network element in the following manner: A consumer (for example, the NWDAF network element containing MTLF) sends Nadrf_MLModelManagement_StorageRequest (Nadrf machine learning model management storage request) to the ADRF network element, where Nadrf_MLModelManagement_StorageRequest includes a model that needs to be stored or an address of the model. The ADRF network element returns a response and provides a result indication. The AI/ML model may be retrieved from the ADRF network element in the following manner: A consumer (for example, the NWDAF network element containing AnLF) sends Nadrf_MLModelManagement _RetrievalRequest (Nadrf machine learning model management retrieval request) to the ADRF network element, where Nadrf_MLModelManagement_RetrievalRequest includes one or more of the following: an analytics (Analytics) identifier (Identifier, ID), a model identifier (model ID) stored in the ADRF network element, or a storage transaction identifier (Storage transaction ID) stored in the ADRF network element. The ADRF network element returns a response and provides a result indication. The AI/ML model may be deleted from the ADRF network element in the following manner: A consumer (for example, the NWDAF network element containing MTLF) sends Nadrf_MLModelManagement_DeleteRequest (Nadrf machine learning model management delete request) to the ADRF network element, where Nadrf_MLModelManagement_DeleteRequest includes a model that needs to be deleted or an address of the model. The ADRF network element returns a response and provides a result indication.

Currently, solutions for model storage and getting are incomplete.

### SUMMARY

Embodiments of this application provide an information exchange method, an apparatus, and a readable storage medium, to optimize a model storage solution. In this way, when a model producer does not specify an allowed network function consumer list (allowed NFc list), or no allowed NFc list exists in a model storage request, model get permissions at two ends that are an ADRF and an NWDAF containing MTLF can be aligned (or synchronized), and determining logic of the ADRF for model authorization check can be pinpointed. Further, security of model getting can be further improved.

The following describes this application from different aspects. It should be understood that implementations and beneficial effects of the following different aspects may be mutually referenced.

According to a first aspect, this application provides an information exchange method. The method includes: A first network element receives a first request from a second network element, where the first request is used to request to store a model, the first request includes a network function (network function, NF) instance identifier (NF instance ID) of the second network element, and the first request does not include an allowed NF consumer (NF consumer, NFc) list (allowed NFc list) corresponding to the model. The first network element generates an allowed NF consumer list (allowed NFc list) for the model, where the allowed NF consumer list includes the NF instance identifier of the second network element, and the NF instance identifier of the second network element that is included in the allowed NF consumer list is used for authorization for the model. The first network element sends a first response to the first request to the second network element.

In this application, the first network element may be an ADRF. The second network element may be an NWDAF containing MTLF, or may be an NWDAF containing MTLF and AnLF. Details are not described below.

In this application, when a storage request (namely, the first request) does not carry the allowed NFc list corresponding to the model, the ADRF generates an allowed NFc list for the model, where the allowed NFc list includes the NF instance ID of the second network element. In this way, model authorization check logic of the ADRF may be used, that is, whether an NF instance ID carried in a model retrieval/get request is in the allowed NFc list is determined, to determine an authorization status for the model. Therefore, in this application, a model storage solution is optimized, and model get permissions at two ends that are the first network element and the second network element are aligned (or synchronized).

With reference to the first aspect, in a possible implementation, the first request further includes a model identifier of the model. After the first network element generates the allowed NF consumer list (allowed NFc list) for the model, the method further includes: The first network element stores the NF instance identifier of the second network element, the allowed NF consumer list, and the model identifier for subsequent use, for example, use in subsequent model retrieval or model getting. For details, refer to the following descriptions. The details are not described herein.

For example, the first request further includes but is not limited to an address of the model in the second network element.

For example, if the first network element generates a storage transaction identifier for the first request, the first network element may further store the storage transaction identifier for subsequent use.

With reference to the first aspect, in a possible implementation, the first response includes the model identifier, or the first response includes the model identifier and the storage transaction identifier. After the first network element sends the first response to the first request to the second network element, the method further includes: The first network element receives a second request, where the second request is used to request to obtain the model. When an NF instance identifier carried in the second request is in the allowed NF consumer list, the first network element sends a second response to the second request, where the second response carries information about the stored model in the first network element. The second request includes the NF instance identifier, and the second request further includes the model identifier or the storage transaction identifier. The model identifier or the storage transaction identifier may be used to index the model. The second response includes one or more of the following: a storage address of the model in the first network element, or a model file of the model. Optionally, the second response further includes an identifier of the first network element.

For example, the first network element rejects the second request when the NF instance identifier carried in the second request is not in the allowed NF consumer list.

In this application, when a model is stored, an allowed NFc list corresponding to the model is not carried; and when a model is retrieved/got, the model is not returned to another network element other than a model producer (namely, the second network element), and determining logic of the ADRF during model authorization check is pinpointed. This can reduce a model leakage risk caused because the ADRF sends the model to an unauthorized network element when considering, due to inexistence of the allowed NFc list, that the model has no permission restriction, and improve security. In addition, this can further resolve a problem that the model producer (namely, the second network element) cannot obtain the model because the ADRF considers, due to inexistence of the allowed NFc list, that no network element can obtain the model and rejects all retrieval requests.

With reference to the first aspect, in a possible implementation, the first request further includes first indication information, and the first indication information indicates that the second network element does not authorize another network element to obtain the model. Alternatively, the first indication information indicates that the model is not allowed to be got by another network element (namely, another network element other than the second network element), or indicates that the second network element does not authorize any network element to obtain the model.

The "another network element" in this application may be another NWDAF network element, or may be any network element in a network other than the second network element. This is not limited in this application. Similarly, the "any network element" in this application may be any NWDAF network element, or may be any network element in the network. Details are not described below.

In this application, indication information is carried in the storage request (namely, the first request) to indicate that the second network element does not authorize another network element to obtain the model. This has a clear meaning and is easy to implement.

With reference to the first aspect, in a possible implementation, after the first network element receives the first request from the second network element, the method further includes: The first network element determines, on a basis that the first request does not include the allowed NF consumer list corresponding to the model, that the second network element does not authorize another network element to obtain the model, or the model is not allowed to be got by another network element (namely, another network element other than the second network element).

For example, before the first network element receives the first request from the second network element, for example, in a network element registration procedure, the method further includes: The first network element sends a third request to a network repository function (network repository function, NRF) network element, where the third request is used to notify the NRF network element of an NF profile of the first network element or register the NF profile of the first network element with the NRF network element, the third request includes second indication information, and the second indication information indicates that when an allowed network function NF consumer list corresponding to a model does not exist, another network element cannot obtain the model. The second network element discovers the first network element according to a network element discovery procedure, and may obtain, from the NRF network element, model authorization logic of the first network element used when the allowed NFc list does not exist. Then, the second network element determines, based on the model authorization logic of the first network element and a storage policy of the second network element, to store the model in the first network element, for example, send the first request. Therefore, after receiving the first request, the first network element may determine, on a basis that the first request does not include the allowed NFc list corresponding to the model and the locally preconfigured model authorization logic, that the second network element does not authorize another network element to obtain the model, or the model is not allowed to be got by another network element (namely, another network element other than the second network element).

In this application, the model authorization logic used when the allowed NFc list does not exist is preconfigured, so that the model get permissions at two ends that are the first network element and the second network element can be aligned (or synchronized), and signaling overheads can be reduced.

For example, when it is predefined in a standard protocol that the allowed NFc list corresponding to the model does not exist, it indicates that the model producer (for example, the NWDAF network element containing MTLF) does not authorize another network element to obtain the model, or the model is not allowed to be got by another network element (namely, another network element other than the model producer). In this case, when the first request does not include the allowed NF consumer list corresponding to the model, it indicates that the second network element does not authorize another network element to obtain the model.

In this application, the model authorization logic used when the allowed NFc list does not exist is predefined in the standard protocol, so that the model get permissions at two ends that are the first network element and the second network element can be aligned (or synchronized), and signaling exchange can be reduced, thereby reducing the overheads.

With reference to the first aspect, in a possible implementation, after the first network element sends the first response to the first request to the second network element, the method further includes: The first network element receives a fourth request, where the fourth request is used to request to update or delete the model, and the fourth request includes an NF instance identifier. If the NF instance identifier carried in the fourth request is the NF instance identifier of the second network element, the first network element processes the model based on the fourth request.

For example, the fourth request may include the NF instance identifier, and the fourth request may further include the model identifier or the storage transaction identifier. The model identifier or the storage transaction identifier may be used to index the model, and may be further used to index the NF instance identifier of the second network element.

According to a second aspect, this application provides an information exchange method. The method includes: A second network element sends a first request to a first network element, where the first request is used to request to store a model, the first request includes an NF instance identifier (NF instance ID) of the second network element, and the first request does not include an allowed NF consumer list (allowed NFc list) corresponding to the model. The second network element receives a first response from the first network element.

With reference to the second aspect, in a possible implementation, the first request further includes a model identifier of the model.

With reference to the second aspect, in a possible implementation, the first response includes the model identifier, or the first response includes the model identifier and the storage transaction identifier. After the second network element receives the first response from the first network element, the method further includes: The second network element sends a second request to the first network element, where the second request is used to request to obtain the model. The second network element receives a second response from the first network element, where the second response carries information about the stored model in the first network element. The second request includes the NF instance identifier, and the second request further includes the model identifier or the storage transaction identifier. The model identifier or the storage transaction identifier may be used to index the model. The second response includes one or more of the following: a storage address of the model in the first network element, or a model file of the model. Optionally, the second response further includes an identifier of the first network element.

With reference to the second aspect, in a possible implementation, the first request further includes first indication information, and the first indication information indicates that the second network element does not authorize another network element to obtain the model. Alternatively, the first indication information indicates that the model is not allowed to be got by another network element (namely, another network element other than the second network element), or indicates that the second network element does not authorize any network element to obtain the model.

With reference to the second aspect, in a possible implementation, when it is predefined in a standard protocol that the allowed NFc list corresponding to the model does not exist, it indicates that the model producer (for example, the NWDAF network element containing MTLF) does not authorize another network element to obtain the model, or the model is not allowed to be got by another network element (namely, another network element other than the model producer).

With reference to the second aspect, in a possible implementation, after the second network element receives the first response from the first network element, the method further includes: The second network element sends a fourth request to the first network element, where the fourth request is used to request to update or delete the model, and the fourth request includes an NF instance identifier. For example, the fourth request may include the NF instance identifier, and the fourth request may further include the model identifier or the storage transaction identifier. The model identifier or the storage transaction identifier may be used to index the model, and may be further used to index the NF instance identifier of the second network element.

According to a third aspect, this application provides an information exchange method. The method includes: A first network element receives a first request from a second network element, where the first request is used to request to store a model, the first request includes a model identifier of the model and a network function NF instance identifier of the second network element, and the first request does not include an allowed NF consumer list corresponding to the model. The first network element stores the NF instance identifier of the second network element and the model identifier. The first network element sends a first response to the first request to the second network element. The first network element receives a second request, where the second request is used to request to obtain the model. When an NF instance identifier carried in the second request is the stored NF instance identifier of the second network element, the first network element sends a second response to the second request, where the second response carries information about the stored model in the first network element.

For example, the first network element rejects the second request when the NF instance identifier carried in the second request is not the stored NF instance identifier of the second network element.

The first network element may be an ADRF. The second network element may be an NWDAF containing MTLF, or may be an NWDAF containing MTLF and AnLF.

In this application, when a storage request (namely, the first request) does not carry the allowed NFc list corresponding to the model, it indicates that a model producer (namely, the second network element) does not authorize another network element to obtain the model, so that a model storage solution can be optimized, and model get permissions at two ends that are the first network element and the second network element are aligned (or synchronized). When a model is retrieved/got, the ADRF does not return the model to another network element other than the model producer (namely, the second network element), and determining logic of the ADRF during model authorization check is pinpointed. This can reduce a model leakage risk caused because the ADRF sends the model to an unauthorized network element when considering, due to inexistence of the allowed NFc list, that the model has no permission restriction, and improve security. In addition, this can further resolve a problem that the model producer (namely, the second network element) cannot access the model because the ADRF considers, due to inexistence of the allowed NFc list, that no network element can access the model and rejects all retrieval requests.

With reference to the third aspect, in a possible implementation, after the first network element receives the first request from the second network element, the method further includes: The first network element generates an allowed NF consumer list for the model, where the allowed NF consumer list is empty.

The first network element in this application generates an empty allowed NF consumer list for the model, to facilitate subsequent update of the allowed NF consumer list.

With reference to the third aspect, in a possible implementation, the first request further includes first indication information, and the first indication information indicates that the second network element does not authorize another network element to obtain the model. Alternatively, the first indication information indicates that the model is not allowed to be got by another network element (namely, another network element other than the second network element), or indicates that the second network element does not authorize any network element to obtain the model.

In this application, indication information is carried in the storage request (namely, the first request) to indicate that the second network element does not authorize another network element to obtain the model. This has a clear meaning and is easy to implement.

With reference to the third aspect, in a possible implementation, after the first network element receives the first request from the second network element, the method further includes: The first network element determines, on a basis that the first request does not include the allowed NF consumer list corresponding to the model, that the second network element does not authorize another network element to obtain the model, or the model is not allowed to be got by another network element (namely, another network element other than the second network element).

For example, before the first network element receives the first request from the second network element, for example, in a network element registration procedure, the method further includes: The first network element sends a third request to an NRF network element, where the third request is used to notify the NRF network element of an NF profile of the first network element or register the NF profile of the first network element with the NRF network element, the third request includes second indication information, and the second indication information indicates that when an allowed network function NF consumer list corresponding to a model does not exist, another network element cannot obtain the model. The second network element discovers the first network element according to a network element discovery procedure, and may obtain, from the NRF network element, model authorization logic of the first network element used when the allowed NFc list does not exist. Then, the second network element determines, based on the model authorization logic of the first network element and a storage policy of the second network element, to store the model in the first network element, for example, send the first request. Therefore, after receiving the first request, the first network element may determine, on a basis that the first request does not include the allowed NFc list corresponding to the model and the locally preconfigured model authorization logic, that the second network element does not authorize another network element to obtain the model, or the model is not allowed to be got by another network element (namely, another network element other than the second network element).

In this application, the model authorization logic used when the allowed NFc list does not exist is preconfigured, so that the model get permissions at two ends that are the first network element and the second network element can be aligned (or synchronized), and signaling overheads can be reduced.

For example, when it is predefined in a standard protocol that the allowed NFc list corresponding to the model does not exist, it indicates that the model producer (for example, the NWDAF network element containing MTLF) does not authorize another network element to obtain the model, or the model is not allowed to be got by another network element (namely, another network element other than the model producer). In this case, when the first request does not include the allowed NF consumer list corresponding to the model, it indicates that the second network element does not authorize another network element to obtain the model.

In this application, the model authorization logic used when the allowed NFc list does not exist is predefined in the standard protocol, so that the model get permissions at two ends that are the first network element and the second network element can be aligned (or synchronized), and signaling exchange can be reduced, thereby reducing the overheads.

With reference to the third aspect, in a possible implementation, after the first network element sends the first response to the first request to the second network element, the method further includes: The first network element receives a fourth request, where the fourth request is used to request to update or delete the model, and the fourth request includes an NF instance identifier. If the NF instance identifier carried in the fourth request is the NF instance identifier of the second network element, the first network element processes the model based on the fourth request.

For example, the fourth request may include the NF instance identifier, and the fourth request may further include the model identifier or the storage transaction identifier. The model identifier or the storage transaction identifier may be used to index the model, and may be further used to index the NF instance identifier of the second network element.

According to a fourth aspect, this application provides an information exchange method. The method includes: A second network element sends a first request to a first network element, where the first request is used to request to store a model, the first request includes a model identifier of the model and a network function NF instance identifier of the second network element, and the first request does not include an allowed NF consumer list (allowed NFc list) corresponding to the model. The second network element receives a first response from the first network element. The second network element sends a second request to the first network element, where the second request is used to request to obtain the model. The second network element receives a second response from the first network element, where the second response carries information about the stored model in the first network element.

With reference to the fourth aspect, in a possible implementation, the first request further includes first indication information, and the first indication information indicates that the second network element does not authorize another network element to obtain the model. Alternatively, the first indication information indicates that the model is not allowed to be got by another network element (namely, another network element other than the second network element), or indicates that the second network element does not authorize any network element to obtain the model.

With reference to the fourth aspect, in a possible implementation, when it is predefined in a standard protocol that the allowed NFc list corresponding to the model does not exist, it indicates that the model producer (for example, the NWDAF network element containing MTLF) does not authorize another network element to obtain the model, or the model is not allowed to be got by another network element (namely, another network element other than the model producer).

With reference to the fourth aspect, in a possible implementation, after the second network element receives the first response from the first network element, the method further includes: The second network element sends a fourth request to the first network element, where the fourth request is used to request to update or delete the model, and the fourth request includes an NF instance identifier.

For example, the fourth request may include the NF instance identifier, and the fourth request may further include the model identifier or the storage transaction identifier. The model identifier or the storage transaction identifier may be used to index the model, and may be further used to index the NF instance identifier of the second network element.

According to a fifth aspect, this application provides an information exchange method. The method includes: A first network element receives a first request from a second network element, where the first request is used to request to store a model, the first request includes a model identifier of the model and indication information, and the indication information indicates that the second network element authorizes all network elements to obtain the model (or indicates that the model is allowed to be got by all network elements). The first network element sends a first response to the first request to the second network element. The first network element receives a second request from a third network element, where the second request is used to request to obtain the model. The first network element sends, based on the indication information, a second response to the second request to the third network element, where the second response carries information about the stored model in the first network element.

For example, the second response includes one or more of the following: a storage address of the model in the first network element, or a model file of the model. Optionally, the second response further includes an identifier of the first network element. The second request includes the NF instance identifier, and the second request further includes the model identifier or the storage transaction identifier. The model identifier or the storage transaction identifier may be used to index the model.

The first network element may be an ADRF. The second network element may be an NWDAF containing MTLF, or may be an NWDAF containing MTLF and AnLF. The third network element may be an NWDAF containing AnLF. Details are not described below.

"All network elements" in this application may be all NWDAF network elements, or may be any network element in a network. This is not limited in this application, and details are not described below.

In this application, the indication information of the model is carried in a storage request (namely, the first request), to indicate that all network elements can obtain the model. In this way, a model storage solution is optimized, and model get permissions at two ends that are the first network element and the second network element are aligned (or synchronized).

With reference to the fifth aspect, in a possible implementation, after the first network element receives the first request from the second network element, the method further includes: The first network element stores the model identifier and the indication information for subsequent use. That the first network element stores the indication information may be understood as that the first network element stores content indicated by the indication information carried in the first request. In other words, the indication information stored in the first network element may not be an information element that is in the first request and that carries the indication information, but the content actually indicated by the indication information.

With reference to the fifth aspect, in a possible implementation, the first request further includes an allowed NF consumer list corresponding to the model, and the indication information is in the allowed NF consumer list.

With reference to the fifth aspect, in a possible implementation, the first response includes the model identifier, or the first response includes the model identifier and the storage transaction identifier.

For example, that the first network element sends, based on the indication information, a second response to the second request to the third network element includes: If the model identifier or the storage transaction identifier carried in the second request corresponds to the indication information, the first network element sends the second response to the second request to the third network element.

With reference to the fifth aspect, in a possible implementation, the first request further includes an NF instance identifier of the second network element. After the first network element receives the first request from the second network element, the first network element may further store the NF instance identifier of the second network element, to record the NF instance identifier of the second network element, the model identifier, and the indication information. It may be understood that, if the first network element generates a storage transaction identifier for the first request, the first network element may further store the storage transaction identifier for subsequent use.

For example, the first request further includes but is not limited to an address of the model in the second network element.

For example, after the first network element sends the first response to the first request to the second network element, the method further includes: The first network element receives a fourth request from the second network element, where the fourth request is used to request to update or delete the model, and the fourth request includes an NF instance identifier. If the NF instance identifier carried in the fourth request is the NF instance identifier of the second network element, the first network element processes the model based on the fourth request. The fourth request may include the NF instance identifier, and the fourth request may further include the model identifier or the storage transaction identifier. The model identifier or the storage transaction identifier may be used to index the model, and may be further used to index the NF instance identifier of the second network element.

According to a sixth aspect, this application provides an information exchange method. The method includes: A second network element sends a first request to a first network element, where the first request is used to request to store a model, the first request includes a model identifier of the model and indication information, and the indication information indicates that the second network element authorizes all network elements to obtain the model. The second network element receives a first response from the first network element.

With reference to the sixth aspect, in a possible implementation, the first request further includes an allowed NF consumer list corresponding to the model, and the indication information is in the allowed NF consumer list. For example, the first request further includes but is not limited to an NF instance identifier of the second network element, and/or an address of the model in the second network element.

With reference to the sixth aspect, in a possible implementation, the first response includes the model identifier, or the first response includes the model identifier and the storage transaction identifier.

With reference to the sixth aspect, in a possible implementation, the first response includes the model identifier and the storage transaction identifier. After the second network element receives the first response from the first network element, the method further includes: The second network element receives a model provision request from a third network element, where the model provision request includes an analytics identifier of the model, and the model provision request is used to request the second network element to provide the model. The second network element sends a model provision response to the third network element. When a model that is in models corresponding to the analytics identifier and that the third network element is authorized to obtain has a storage transaction identifier, and the third network element is authorized to obtain all models corresponding to the storage transaction identifier, the model provision response includes the storage transaction identifier. In other cases, the model provision response includes the model identifier of the model. For example, when the model that is in the models corresponding to the analytics identifier and that the third network element is authorized to obtain has a storage transaction identifier, and the models corresponding to the storage transaction identifier include a model that the third network element is not authorized to obtain, the model provision response includes the model identifier of the model.

In this application, when the third network element is authorized to obtain all models corresponding to a storage transaction identifier of a model that is in the models corresponding to the analytics identifier and that the third network element is authorized to obtain, the storage transaction identifier is returned to the third network element; otherwise, an identifier of the model that is in the models corresponding to the analytics identifier and that the third network element is authorized to obtain is returned to the third network element. This pinpoints processing logic for the second network element to return the storage transaction identifier or the model identifier, and can reduce a risk that the third network element obtains the model from the first network element (for example, an ADRF) by using the storage transaction identifier in an unauthorized manner.

With reference to the sixth aspect, in a possible implementation, the first request further includes an NF instance identifier of the second network element.

With reference to the sixth aspect, in a possible implementation, after the second network element receives the first response from the first network element, the method further includes: The second network element sends a fourth request to the first network element, where the fourth request is used to request to update or delete the model, and the fourth request includes an NF instance identifier. The fourth request may include the NF instance identifier, and the fourth request may further include the model identifier or the storage transaction identifier. The model identifier or the storage transaction identifier may be used to index the model, and may be further used to index the NF instance identifier of the second network element.

According to a seventh aspect, this application provides an information exchange method. The method includes: A third network element sends a second request to a first network element, where the second request is used to request to obtain a model. The third network element receives a second response from the first network element, where the second response carries information about the stored model in the first network element. The second request includes an NF instance identifier, and further includes a model identifier or a storage transaction identifier.

For example, the second response includes one or more of the following: a storage address of the model in the first network element, or a model file of the model. Optionally, the second response further includes an identifier of the first network element. The second request includes the NF instance identifier, and the second request further includes the model identifier or the storage transaction identifier. The model identifier or the storage transaction identifier may be used to index the model.

With reference to the seventh aspect, in a possible implementation, before the third network element sends the second request to the first network element, the method further includes: The third network element sends a model provision request to the second network element, where the model provision request includes an analytics identifier of the model, and the model provision request is used to request the second network element to provide the model. The third network element receives a model provision response from the second network element, where the model provision response includes the model identifier or the storage transaction identifier of the model. When a model that is in models corresponding to the analytics identifier and that the third network element is authorized to obtain has a storage transaction identifier, and the third network element is authorized to obtain all models corresponding to the storage transaction identifier, the model provision response includes the storage transaction identifier. In other cases, the model provision response includes the model identifier of the model. For example, when the model that is in the models corresponding to the analytics identifier and that the third network element is authorized to obtain has a storage transaction identifier, and the models corresponding to the storage transaction identifier include a model that the third network element is not authorized to obtain, the model provision response includes the model identifier of the model.

In this application, when the third network element is authorized to obtain all models corresponding to a storage transaction identifier of a model that is in the models corresponding to the analytics identifier and that the third network element is authorized to obtain, the storage transaction identifier is returned to the third network element; otherwise, an identifier of the model that is in the models corresponding to the analytics identifier and that the third network element is authorized to obtain is returned to the third network element. This pinpoints processing logic for the second network element to return the storage transaction identifier or the model identifier, and can reduce a risk that the third network element obtains the model from the first network element (for example, an ADRF) by using the storage transaction identifier in an unauthorized manner.

According to an eighth aspect, this application provides an information exchange method. The method includes: A second network element determines a second model based on a first model. The second network element sends a storage request to a first network element, where the storage request is used to request to store the second model in the first network element, the storage request includes an allowed NF consumer list corresponding to the second model, and the allowed NF consumer list corresponding to the second model is determined based on an allowed NF consumer list corresponding to the first model.

For example, the storage request further includes but is not limited to an NF instance identifier (NF instance ID) of the second network element, a model identifier of the second model, and a storage address of the second model in the second network element.

The first network element may be an ADRF. The second network element may be an NWDAF containing MTLF, or may be an NWDAF containing MTLF and AnLF. Details are not described below.

In this embodiment of this application, the second model is determined based on the existing first model, and an allowed NFc list of an existing model (namely, the first model) is used to replace an allowed NFc list of a newly generated model (namely, the second model), so that a manner of setting a model get permission in a retraining scenario is pinpointed/optimized.

With reference to the eighth aspect, in a possible implementation, that a second network element determines a second model based on a first model includes: The second network element re-provides the second model based on accuracy of the first model. For example, the second network element finds, based on internal logic of the second network element, that the accuracy of the first model is lower than a preset threshold, and determines to regenerate a new model (namely, the second model) to implement a same or similar function.

For example, that the second network element re-provides the second model based on accuracy of the first model further includes: The second network element retrains the first model to obtain the second model.

With reference to the eighth aspect, in a possible implementation, that the allowed NF consumer list corresponding to the second model is determined based on an allowed NF consumer list corresponding to the first model includes: The allowed NF consumer list corresponding to the second model is the same as the allowed NF consumer list corresponding to the first model. For example, the second network element uses the allowed NF consumer list corresponding to the first model as the allowed NF consumer list corresponding to the second model.

According to a ninth aspect, this application provides an information exchange method. The method includes: A first network element receives a storage request from a second network element, where the storage request is used to request to store a second model in the first network element, and the storage request includes an allowed NF consumer list corresponding to the second model. For example, the storage request further includes but is not limited to an NF instance identifier (NF instance ID) of the second network element, a model identifier of the second model, and a storage address of the second model in the second network element.

According to a tenth aspect, this application provides an information exchange method. The method includes: A second network element receives a model provision request from a third network element, where the model provision request includes an analytics identifier, the model provision request is used to request the second network element to provide first models corresponding to the analytics identifier, and the analytics identifier corresponds to a storage transaction identifier. The second network element sends a model provision response to the third network element. When the third network element is authorized to obtain all second models corresponding to the storage transaction identifier, the model provision response includes the storage transaction identifier; otherwise, the model provision response does not include the storage transaction identifier.

For example, that the third network element is not authorized to obtain all second models corresponding to the storage transaction identifier may be understood as that the second models corresponding to the storage transaction identifier include a model that the third network element is not authorized to obtain.

For example, that the model provision response does not include the storage transaction identifier may be understood as that the model provision response includes an identifier of a model that is in the first models corresponding to the analytics identifier and that the third network element is authorized to obtain.

It may be understood that the analytics identifier may be used to identify a function/an effect of a model, and there may be a plurality of models configured to implement a same function. Therefore, one analytics identifier may correspond to one or more models. One storage transaction identifier may be understood as a credential for one time of storage, and one or more models may be stored during one time of storage. Therefore, one or more models may be indexed by using one storage transaction identifier. Therefore, a correspondence between the analytics identifier and the storage transaction identifier may be generated through a model. For example, one analytics identifier may correspond to one or more storage transaction identifiers.

For example, that the analytics identifier carried in the model provision request corresponds to the storage transaction identifier may be understood as that the model that the third network element is authorized to obtain exists in the first models corresponding to the analytics identifier carried in the model provision request, and the model that the third network element is authorized to obtain has a storage transaction identifier. In this case, when the third network element is authorized to obtain all models corresponding to the storage transaction identifier, the model provision response includes the storage transaction identifier. Alternatively, in other cases, to be specific, when the third network element is not authorized to obtain all models corresponding to the storage transaction identifier, the model provision response does not include the storage transaction identifier, for example, the model provision response includes an identifier of the model that is in the first models corresponding to the analytics identifier and that the third network element is authorized to obtain.

The second network element may be an NWDAF containing MTLF, or may be an NWDAF containing MTLF and AnLF. The third network element may be an NWDAF containing AnLF.

In this application, when the third network element is authorized to obtain all models corresponding to a storage transaction identifier of a model that is in the models corresponding to the analytics identifier and that the third network element is authorized to obtain, the storage transaction identifier is returned to the third network element; otherwise, an identifier of the model that is in the models corresponding to the analytics identifier and that the third network element is authorized to obtain is returned to the third network element. This pinpoints processing logic for the second network element to return the storage transaction identifier or the model identifier, and can reduce a risk that the third network element obtains the model from the first network element (for example, an ADRF) by using the storage transaction identifier in an unauthorized manner.

According to an eleventh aspect, this application provides an information exchange method. The method includes: A third network element sends a model provision request to a second network element, where the model provision request includes an analytics identifier of a model, the model provision request is used to request the second network element to provide first models corresponding to the analytics identifier, and the analytics identifier corresponds to a storage transaction identifier. The third network element receives a model provision response from the second network element, where the model provision response includes the storage transaction identifier, or includes an identifier of a model that is in the first models corresponding to the analytics identifier and that the third network element is authorized to obtain.

According to a twelfth aspect, this application provides an information exchange method. The method includes: A first network element receives a second request from a third network element, where the second request is used to request to obtain a model from the first network element, and the second request includes a storage transaction identifier. The first network element sends a second response to the second request to the third network element. If a model that the third network element is authorized to obtain exists in models corresponding to the storage transaction identifier carried in the second request, the second response may include the model that the third network element is authorized to obtain and that is included in the models corresponding to the storage transaction identifier, and/or an address of the model in the first network element. Alternatively, if the third network element is not authorized to obtain all models corresponding to the storage transaction identifier carried in the second request, the second response may be used to reject the second request.

It may be understood that the storage transaction identifier carried in the second request may be obtained by the third network element from the second network element (for example, an NWDAF containing MTLF) by using a model provision request.

The first network element is an ADRF, and the third network element is an NWDAF containing AnLF.

When the third network element in this application retrieves/obtains a model by using a storage transaction identifier, after receiving the storage transaction identifier, the first network element returns, to the third network element, only a model that the third network element is authorized to obtain and that is included in models corresponding to the storage transaction identifier; or rejects a request from the third network element when the third network element is not authorized to obtain all models corresponding to the storage transaction identifier. In this way, processing logic used after the ADRF side receives the storage transaction identifier is pinpointed, and the solution is optimized.

According to a thirteenth aspect, this application provides a communication apparatus. The communication apparatus may be a first network element, a second network element, or a chip in the first network element or the second network element. The communication apparatus includes a unit and/or module configured to perform the method according to any one of the first aspect to the twelfth aspect or any possible implementation of any one of the first aspect to the twelfth aspect, for example, a transceiver unit and/or a processing unit. The transceiver unit is configured to send and receive various information or signaling. Therefore, beneficial effects (or advantages) of the method according to any one of the foregoing aspects can also be implemented.

According to a fourteenth aspect, this application provides a communication apparatus. The communication apparatus may include a processor and a transceiver. The transceiver is configured to send and receive various information or signaling. A computer program includes program instructions. When the program instructions are run on the processor, the communication apparatus is enabled to perform the information exchange method according to any one of the first aspect to the twelfth aspect or any possible implementation of any one of the first aspect to the twelfth aspect. The transceiver may be a radio frequency module, a combination of the radio frequency module and an antenna, or an input/output interface of a chip or a circuit in the communication apparatus. Optionally, the communication apparatus further includes a memory, and the memory is configured to store the computer program.

According to a fifteenth aspect, this application provides a readable storage medium, where the readable storage medium stores program instructions, and when the program instructions are run on a communication apparatus, the communication apparatus is enabled to perform the information exchange method according to any one of the first aspect to the twelfth aspect or any possible implementation of any one of the first aspect to the twelfth aspect.

According to a sixteenth aspect, this application provides a computer program product including instructions. When the instructions are run, the information exchange method according to any possible implementation of any one of the first aspect to the twelfth aspect is performed.

According to a seventeenth aspect, this application provides a communication apparatus. The communication apparatus may be implemented in a form of a chip, or may be implemented in a form of a device. The apparatus includes a processor. The processor is configured to read a program stored in a memory and execute the program, to perform the information exchange method according to any one or more items in any one of the first aspect to the twelfth aspect, or one or more items in any possible implementation of any one of the first aspect to the twelfth aspect. Optionally, the apparatus further includes a memory, and the memory is connected to the processor through a circuit. Further, optionally, the apparatus further includes a communication interface, and the processor is connected to the communication interface. The communication interface is configured to receive information and/or signaling that need/needs to be processed. The processor obtains the information and/or signaling from the communication interface, processes the information and/or signaling, and outputs a processing result through the communication interface. The communication interface may be an input/output interface.

Optionally, the processor and the memory may be physically mutually independent units, or the memory may be integrated with the processor.

According to an eighteenth aspect, this application provides a communication system. The communication system includes the first network element and the second network element, and optionally includes the NRF network element; or the communication system includes the second network element and the third network element; or the communication system includes the first network element, the second network element, and the third network element.

For technical effects achieved in the foregoing aspects, mutual reference may be made between the aspects or reference may be made to beneficial effects in the following method embodiments. Details are not described herein.

### BRIEF DESCRIPTION OF DRAWINGS

FIG. 1 is a diagram of a system architecture according to an embodiment of this application;
FIG. 2A and FIG. 2B are a schematic flowchart of secured and authorized AI/ML model sharing according to an embodiment of this application;
FIG. 3 is a first schematic flowchart of an information exchange method according to an embodiment of this application;
FIG. 4 is a second schematic flowchart of an information exchange method according to an embodiment of this application;
FIG. 5 is a third schematic flowchart of an information exchange method according to an embodiment of this application;
FIG. 6 is a fourth schematic flowchart of an information exchange method according to an embodiment of this application;
FIG. 7 is a fifth schematic flowchart of an information exchange method according to an embodiment of this application;
FIG. 8 is a sixth schematic flowchart of an information exchange method according to an embodiment of this application;
FIG. 9 is a seventh schematic flowchart of an information exchange method according to an embodiment of this application;
FIG. 10 is a diagram of a structure of a communication apparatus according to an embodiment of this application;
FIG. 11 is another diagram of a structure of a communication apparatus according to an embodiment of this application; and
FIG. 12 is still another diagram of a structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)", "one or more of the following items (pieces)", or a similar expression thereof means any combination of these items, including a singular item (piece) or any combination of plural items (pieces). For example, at least one of a, b, or c may indicate a, b, c, a and b, a and c, b and c, or a, b, and c. a, b, and c may be singular or plural.

In the descriptions of this application, words such as "first" and "second" are merely used to distinguish between different objects, and do not limit quantities and execution sequences. In addition, the words such as "first" and "second" do not indicate a definite difference. In addition, terms such as "include", "have", and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In this application, the term "example", "for example", or the like is used to represent giving an example, an illustration, or a description. Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

In addition, the terms "system" and "network" may be used interchangeably in this specification.

It may be understood that in embodiments of this application, "B corresponding to A" indicates that there is a correspondence between A and B, and B may be determined based on A. However, it should be further understood that determining B based on A does not mean that B is determined based only on A, and B may alternatively be determined based on A and/or other information.

The following briefly describes network elements and system architectures in this application.

A network data analytics function (network data analytics function, NWDAF) network element supports collecting data from another network function network element and an application function (application function, AF) network element, collecting data from an operation administration and maintenance (operation administration and maintenance, OAM) network element, providing analytics information for the another network function and the AF network element, and the like.

An NWDAF network element provides functions such as data collection, model training, data analytics, and model inference. The NWDAF network element may be configured to: collect related data from a network function network element, a third-party service server, a terminal device, or a network management system, perform data analytics based on the related data to obtain an analytics result, and provide the analytics result for the network function network element, the third-party service server, the terminal device, or the network management system. The analytics result may assist a network in selecting a quality of service parameter of a service, assist the network in performing traffic routing, assist the network in selecting a background data transfer policy, or the like. In addition, the NWDAF network element may be further configured to: collect related data from the network function network element, the third-party service server, the terminal device, or the network management system, perform model training based on the related data to obtain an artificial intelligence (artificial intelligence, AI) model or a machine learning (machine learning, ML) model, and provide the AI model/ML model for another NWDAF network element. The AI model/ML model may be configured to assist the NWDAF network element in generating a data analytics result based on the related data.

An NWDAF network element containing AnLF (NWDAF containing AnLF) may be configured to: perform inference and export analytics information (that is, export statistics information and/or predictions by analyzing a consumer request), and expose an analytics service. An NWDAF network element containing MTLF (NWDAF containing MTLF) may be configured to: train a machine learning (machine learning, ML) model, and expose a new training service, for example, provide a trained ML model.

For ease of description, in this application, the "NWDAF network element containing AnLF (NWDAF containing AnLF) may be simply represented as an "AnLF", and in some cases, the two may be used interchangeably; and the "NWDAF network element containing MTLF (NWDAF containing MTLF) may be simply represented as an "MTLF", and in some cases, the two may be used interchangeably.

An analytics data repository function (analytics data repository function, ADRF) network element may provide AI/ML model storage, deletion, and retrieval services. The ADRF network element may further provide data storage and retrieval services, and analytics storage and retrieval services. For example, a consumer sends a data management storage request (Nadrf Data Management Storage Request) to the ADRF network element, where the data management storage request includes data or analytics to be stored. Alternatively, a consumer sends a data management storage subscription request (Nadrf Data Management Storage Subscription Request) to the ADRF network element, to request the ADRF network element to subscribe to data or analytics to be stored, and then the ADRF network element subscribes to an NWDAF network element or a data collection control function (data collection control function, DCCF) network element to obtain the data or analytics. The analytics or data can be provided as notifications by using a DCCF data management (Ndccf_DataManagement) service, an NWDAF data management (Nnwdaf_DataManagement) service, or a messaging framework adaptor function (the messaging framework adaptor function, MFAF) data management (Nmfaf_3caDataManagement) service.

The technical solutions provided in this application may be applied to various communication systems in which virtualized network functions are deployed, for example, a 5th generation (5th generation, 5G) communication system or new radio (new radio, NR), a network with a network functions virtualization infrastructure (network functions virtualization infrastructure, NFVI) or another long term evolution (long term evolution, LTE) network with a virtualized network function, a MulteFire network (where a new wireless network is created by using an LTE technology independently run on an unlicensed spectrum (for example, a global 5 GHz unlicensed spectrum)), a home base station network, a wireless fidelity (wireless fidelity, Wi-Fi) access mobile network, and a wideband code division multiple access (wideband code division multiple access, WCDMA) network, a fixed-mobile convergence network (where a fixed access network accesses a mobile network), and another future communication system like a 6th generation mobile communication system.

For example, the technical solutions provided in this application may be applied to a 5G system architecture defined in the 3rd Generation Partnership Project Technical Specification (3rd Generation Partnership Project Technical Specification, 3GPP TS) 23.288.

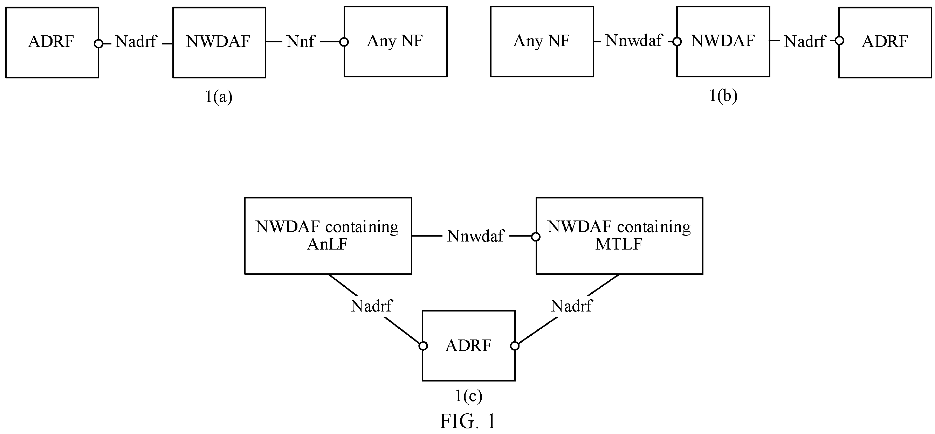

FIG. 1 is a diagram of a system architecture according to an embodiment of this application. An architecture used for data collection is shown in 1(a) of FIG. 1. The 5G system architecture allows an NWDAF network element to collect data from any 5G core network (5G core, 5GC) network function (network function, NF) (the 5G System architecture allows NWDAF to collect data from any 5GC NF). The NWDAF network element belongs to a same public land mobile network (public land mobile network, PLMN) as the 5GC NF that provides data (The NWDAF belongs to the same PLMN as the 5GC NF that provides the data).

A network data analytics exposure architecture (Network Data Analytics Exposure architecture) is shown in 1(b) of FIG. 1. The 5G system architecture allows any 5GC network function to request network analytics information from an NWDAF network element containing analytics logical function (AnLF) (the 5G System architecture allows any 5GC NF to request network analytics information from NWDAF containing Analytics logical function (AnLF)). The NWDAF network element belongs to a same PLMN as the 5GC NF that consumes the analytics information (The NWDAF belongs to the same PLMN as the 5GC NF that consumes the analytics information).

A trained machine learning model provisioning architecture (Trained ML Model Provisioning architecture) is shown in 1(c) of FIG. 1. The 5G system architecture allows an NWDAF network element containing analytics logical function (AnLF) to use trained ML model provisioning services from another NWDAF network element containing model training logical function (MTLF) (the 5G System architecture allows NWDAF containing Analytics logical function (AnLF) to use trained ML model provisioning services from another NWDAF containing Model Training logical function (MTLF)).

It may be understood that "Any NF" shown in FIG. 1 represents any network function network element in the 5GC, and "Nnf" and "Nnwdaf" represent names of service-oriented interfaces. For details, refer to related descriptions in the 3GPP standard protocol. The details are not described herein. It may be further understood that, for functions or effects of the network elements shown in FIG. 1, refer to a related protocol, standard, or the like. Details are not described herein.

It may be further understood that, with development and evolution of the standard, the NWDAF network element in FIG. 1 may alternatively be a network element that is in a future communication system and that has a same or similar function as the NWDAF network element. This is not limited in this application.

A detailed procedure for secured and authorized AI/ML model sharing between different vendors (The detailed procedure for secured and authorized AI/ML model sharing between different vendors) is briefly described below for better understanding of the technical solutions in embodiments of this application.

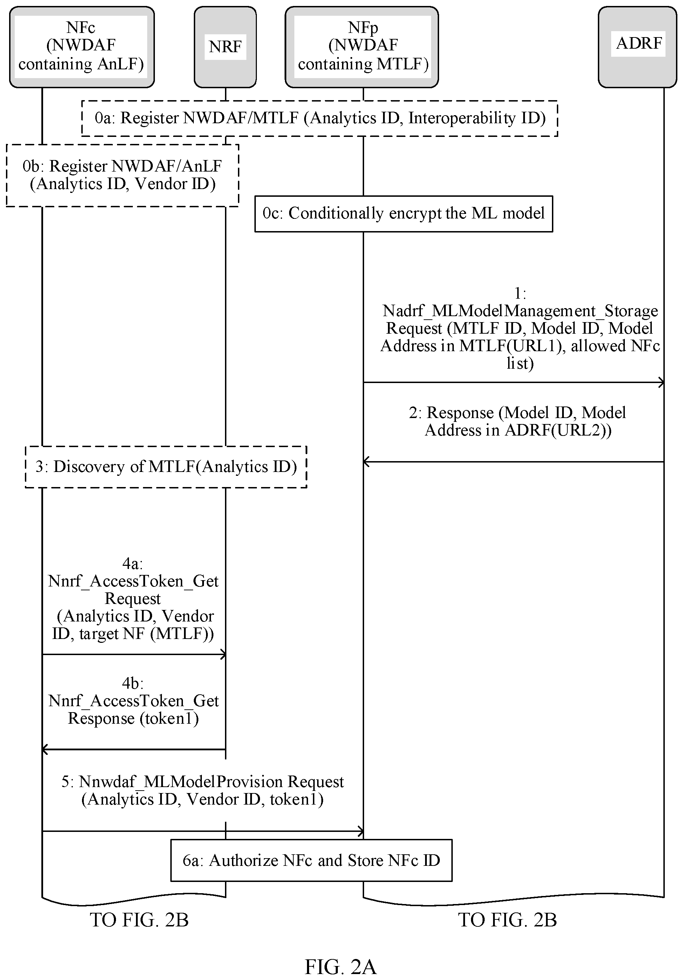

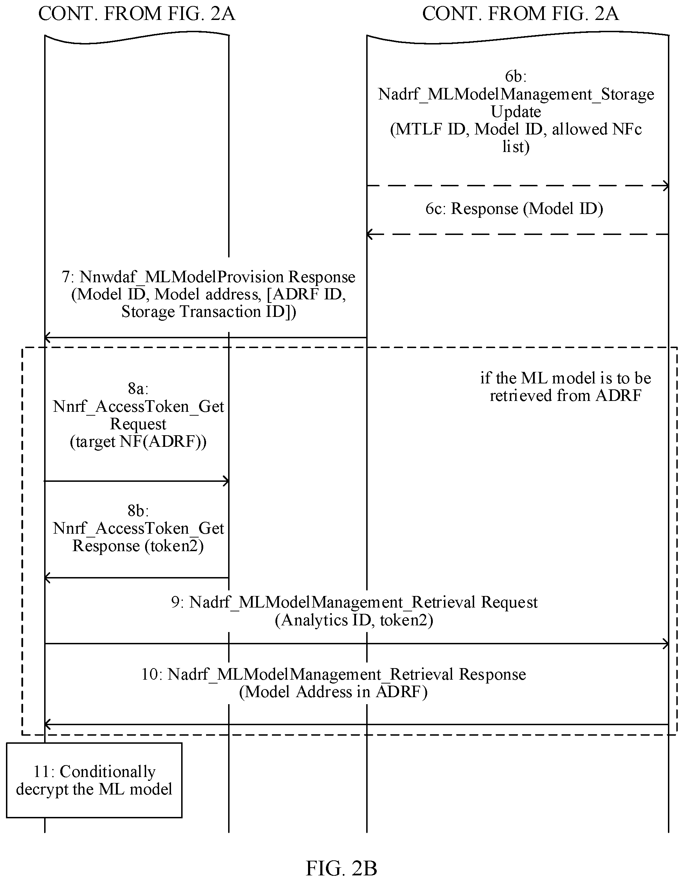

FIG. 2A and FIG. 2B are a schematic flowchart of secured and authorized AI/ML model sharing according to an embodiment of this application. As shown in FIG. 2A and FIG. 2B, a procedure for secured and authorized AI/ML model sharing between different vendors includes but is not limited to the following steps.

Step 0a: Register an NWDAF containing MTLF, where the NWDAF containing MTLF includes an analytics ID (Analytics ID) and an interoperability ID (Interoperability ID). An NF service producer (NF Service producer, NFp), namely, the NWDAF containing MTLF, registers, by using an ML model interoperability indicator, an NF profile of the NF service producer in a network repository function (network repository function, NRF) based on the analytics ID. The ML model interoperability indicator may be used to represent a list of NWDAF providers (or vendors) that allow to retrieve an ML model from the NWDAF containing MTLF.

Step 0b: Register an NWDAF containing AnLF, where the NWDAF containing AnLF includes an analytics ID and a vendor ID. An NF service consumer (NF Service consumer, NFc), for example, the NWDAF containing AnLF in the NRF, includes a vendor ID.

Step 0c: Conditionally encrypt the ML model. Unless an AI/ML model generator (namely, the NWDAF containing AnLF) and a storage platform (namely, an ADRF) are parts of a same system and belong to a security domain of a same vendor and operator, the model is stored in an encrypted format.

Step 1: The NWDAF containing MTLF triggers Nadrf_MLModelManagement_StorageRequest (Nadrf machine learning model management storage request). Nadrf_MLModelManagement_StorageRequest includes an NWDAF containing MTLF ID, a model ID, and a model address (for example, a uniform resource locator 1 (uniform resource locator 1, URL 1)) in the NWDAF containing MTLF, and optionally further includes an allowed NFc list (allowed NFc list).

Step 2: The ADRF sends a response to the NWDAF containing MTLF. The response contains the model ID and a model address (for example, a URL 2) in the ADRF.

Step 3: Discovery of the NWDAF containing MTLF. The NF service consumer (NFc), for example, the NWDAF containing AnLF, uses the requested analytics ID to perform an Nnrf_NFDiscovery_Request (Nnrf network function discovery request) operation to select an appropriate NF service producer (NFp), for example, the NWDAF containing MTLF.

Step 4a: The NF service consumer (NFc), for example, the NWDAF containing AnLF, performs an Nnrf_AccessToken_Get (Nnrf access token get) request operation to request an access token from the NRF. An Nnrf_AccessToken_Get request message includes but is not limited to the vendor ID and the analytics ID that are of the NWDAF containing AnLF.

Step 4b: The NRF checks whether the NWDAF containing AnLF is authorized to access a requested service in the NWDAF containing MTLF, verifies whether the vendor ID of the NF service consumer (NFc) is included in the interoperability indicator of the NWADF containing MTLF for the analytics ID, and grants a token 1 (token 1) based on the vendor ID provided by the NF service consumer (NFc) during registration.

Step 5: The NF service consumer (NFc) performs an Nnwdaf_MLModelProvision request (Nnwdaf machine learning model provision request) service operation on the NWDAF containing MTLF, to retrieve an ML model corresponding to the analytics ID. An Nnwdaf_MLModelProvision request includes the analytics ID, the vendor ID, and the token 1.

Step 6a: Authorize the NFc and store an NFc ID. The NWDAF containing MTLF performs identity authentication on the NF service consumer (NFc), verifies the access token 1, and ensures that the access token 1 includes the analytics ID. If the verification succeeds, the NWDAF containing MTLF determines a to-be-shared ML model for the requested analytics ID, and stores an NF instance ID (NF instance ID) including the NWDAF containing AnLF as a part of an allowed NFc list corresponding to the ML model.

Step 6b: If it is determined that the to-be-shared ML model is stored in the ADRF, and the NF service consumer (NFc) is not in the allowed NFc list stored in the ADRF, the NWDAF containing MTLF triggers update at the ADRF by using Nadrf_MLModelManagement_StorageRequest (Nadrf machine learning model management storage request). Nadrf_MLModelManagement_StorageRequest includes the NWDAF containing MTLF ID, the model ID, and the allowed NFc list. Then, the ADRF stores the allowed NFc list for the ML model corresponding to the model ID.

Step 6c: The ADRF sends a response to the NWDAF containing MTLF, where the response includes the model ID.

Step 7: The NWDAF containing MTLF sends Nnwdaf_MLModelProvision Response (Nnwdaf machine learning model provision response) to the NF service consumer (NFc), where Nnwdaf_MLModelProvision Response includes the model ID and an address of an ML model that is determined to be shared. The address may be an address (namely, the URL 1) of the ML model stored in the NWDAF containing MTLF, or may be an address (namely, the URL 2) of the ML model stored in the ADRF. If the model is stored in the ADRF, the message may also include an ADRF ID. Optionally, Nnwdaf_MLModelProvision Response further includes a storage transaction identifier (Storage Transaction ID).

Step 8a: The NF service consumer (NFc) requests an access token from the NRF, so that the NF service consumer (NFc) is authorized to retrieve a model stored in the ADRF.

Step 8b: The NRF verifies whether the NF service consumer (NFc), for example, the NWDAF containing AnLF, is authorized to access a service provided by the ADRF. If the verification succeeds, the NRF grants a token 2 (token 2) based on information provided in an NF profile of the ADRF.

Step 9: The NF service consumer (NFc), for example, the NWDAF containing AnLF, sends Nadrf_MLModelManagement_RetrievalRequest (Nadrf machine learning model management retrieval request) to retrieve a target model. Nadrf_MLModelManagement_RetrievalRequest includes the analytics ID and the token 2.

Step 10: The ADRF performs identity authentication on the NF service consumer (NFc), and verifies the access token (token 2). The ADRF further verifies whether an NF ID of the NF service consumer (NFc) is included in the allowed NFc list corresponding to the ML model. If the verification succeeds, the ADRF sends Nadrf_MLModelManagement_Retrieval Response (Nadrf machine learning model management retrieval response) to the NF service consumer (NFc). Nadrf_MLModelManagement_Retrieval Response includes the storage address of the model in the ADRF.

Step 11: Conditionally decrypt the ML model. The NF service consumer (NFc) retrieves the ML model from the ADRF, and decrypts the model based on implementation by a vendor.

It can be learned from FIG. 2A and FIG. 2B that solutions for AI/ML model storage and sharing (or getting) are incomplete. For example, in step 1 in FIG. 2A, the NWDAF containing MTLF does not include an allowed NFc list in a storage request. In this case, the ADRF has uncertainty during model authorization check (for example, step 10 in FIG. 2B), and model get permissions at two ends that are the NWDAF containing MTLF and the ADRF may be asynchronous. As a result, an intended purpose of the NWDAF containing MTLF may be inconsistent with determining logic of the ADRF, and model leakage may be further caused.

For example, a model consumer requests a model from the ADRF by constructing a model ID. In this case, because an allowed NF list of a model corresponding to the Model ID does not exist (this is because the NWDAF containing MTLF does not include the allowed NF list in the model storage request, and the NWDAF containing MTLF does not receive a model get request, and does not perform an allowed NFc list update procedure in step 6b and step 6c shown in FIG. 2B), the ADRF does not know how to perform authorization for the model. In this case, the ADRF has uncertainty during model authorization check (for example, step 10 in FIG. 2B), and model get permissions at two ends that are the NWDAF containing MTLF and the ADRF may be asynchronous. As a result, an intended purpose of the NWDAF containing MTLF may be inconsistent with determining logic of the ADRF, and model leakage may be further caused.

In view of this, embodiments of this application provide an information exchange method, an apparatus, and a readable storage medium, to optimize a model storage solution. In this way, when a model producer does not specify an allowed NFc list, or no allowed NFc list exists in a model storage request, model get permissions at two ends that are the ADRF and the NWDAF containing MTLF can be aligned (or synchronized), and determining logic of the ADRF for model authorization check can be pinpointed. Further, a model leakage risk can be reduced, and security of model getting can be improved.

The following describes the technical solutions provided in this application in detail with reference to more accompanying drawings.

The technical solutions provided in this application are described by using a plurality of embodiments. For details, refer to descriptions of the following embodiments. Mutual reference may be made between same or similar parts in embodiments or implementations. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

In this application, the "allowed NF consumer list (allowed NFc list)" may be understood as a list of network function instance identifiers (NF instance IDs) that are allowed to get/retrieve/access/query for a model. The "allowed NF consumer list (allowed NFc list)" may also be referred to as an "allowed NF instance identifier list (Allowed NF Instance ID list)", an "allowed network function list (Allowed NF list)", or the like. This is not limited in this application.

In addition, "obtaining a model" in this application may be understood as downloading (or obtaining) a model from the ADRF to local, or may be understood as "retrieving a model (retrieving a model)", "accessing a model", "querying for a model", or the like.

The following describes each embodiment in detail.

### Embodiment 1

Embodiment 1 of this application mainly states that when a storage request sent by an NWDAF containing MTLF does not carry an allowed NFc list, an ADRF generates an allowed NFc list for a model, and the allowed NFc list includes an NF instance ID corresponding to the NWDAF containing MTLF.

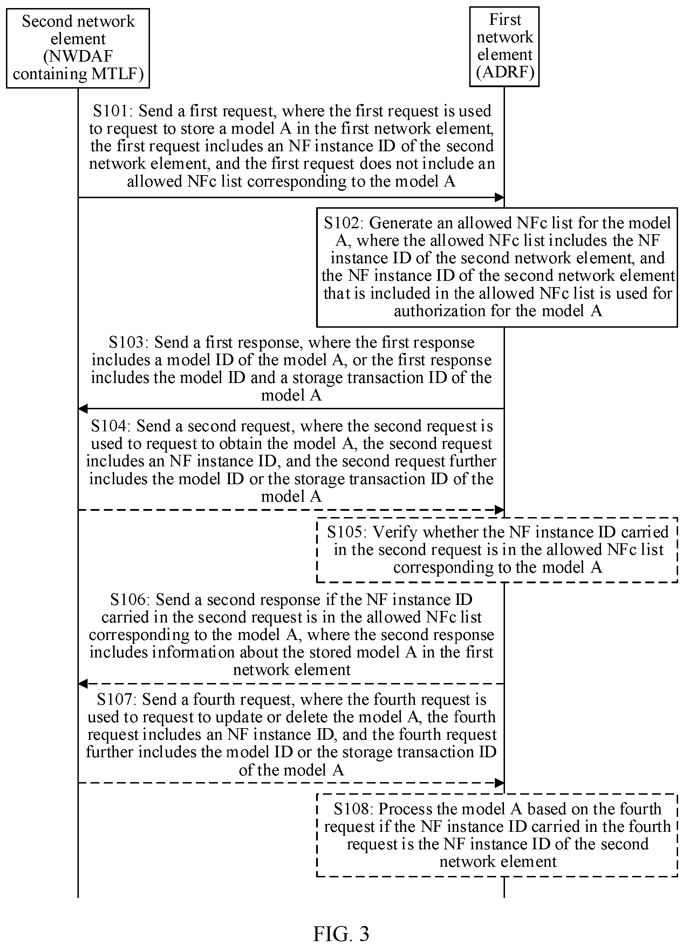

FIG. 3 is a first schematic flowchart of an information exchange method according to an embodiment of this application. In the method, a first network element may be an ADRF, and a second network element may be an NWDAF containing MTLF. Certainly, the second network element may alternatively be an NWDAF containing MTLF and AnLF. This is not limited in this embodiment of this application.

As shown in FIG. 3, the information exchange method includes but is not limited to the following steps.

S101: The second network element (for example, the NWDAF containing MTLF) sends a first request to the first network element (for example, the ADRF), where the first request is used to request to store a model A in the first network element, the first request includes an NF instance ID of the second network element, and the first request does not include an allowed NFc list corresponding to the model A.

Correspondingly, the first network element (for example, the ADRF) receives the first request.

In a possible implementation, the first request may be used to request to store one or more models in the first network element. For example, the first request may be Nadrf_MLModelManagement_StorageRequest. The first request may include but is not limited to: an NF instance ID (NF instance ID) of the second network element, a model identifier (that is, a model ID) of each model in the one or more models, and an address (which may be represented by using a URL or a fully qualified domain name (fully qualified domain name, FQDN)) of each model in the second network element. For ease of description, in this embodiment of this application, the following uses an example in which the model A is stored in the first network element. In this case, the first request may include but is not limited to: the NF instance ID of the second network element, a model ID of the model A, and an address (for example, a URL 1) of the model A in the second network element. In addition, the first request does not include an allowed NF consumer list (allowed NFc list) corresponding to the model A.

It may be understood that the NF instance ID may be used to uniquely identify a network function instance (NF Instance ID: Unique identity of the NF Instance). The model ID can be used to uniquely identify a model (ML Model identifier: unique ML Model identifier). An address of a model in the second network element may be used by the first network element to obtain (for example, download) a model file from the second network element based on the address and store the model file locally.

It may be understood that the model in this application may be an ML model, or may be an AI model. This is not limited.

S102: The first network element (for example, the ADRF) generates an allowed NFc list for the model A, where the allowed NFc list includes the NF instance ID of the second network element, and the NF instance ID of the second network element that is included in the allowed NFc list is used for authorization for the model A.

In a possible implementation, after receiving the first request, the first network element may obtain (for example, download) the model A from the second network element based on the address (for example, the URL 1) of the model A in the second network element, and store the model A locally. Because the first request does not carry the allowed NFc list corresponding to the model A, the first network element may generate an allowed NFc list for the model A. The allowed NFc list generated by the first network element includes the NF instance ID of the second network element. For example, the first network element may generate an empty allowed NFc list for the model A, and then add, to the allowed NFc list, the NF instance ID of the second network element carried in the first request. The first network element may alternatively generate an allowed NFc list including the NF instance ID of the second network element for the model A. This is not limited in this embodiment of this application.

In a possible implementation, the first request further includes first indication information, where the first indication information may indicate that the second network element does not authorize another network element to obtain the model A, or the model A is not allowed to be got by another network element (namely, another network element other than the second network element), or the second network element does not authorize any network element to obtain the model A. Therefore, after receiving the first request, the first network element may generate an allowed NFc list for the model A, and the NF instance ID of the second network element is included in the allowed NFc list.

In a possible implementation, before step S102, the information exchange method may further include: The first network element determines, on a basis that the first request does not include the allowed NFc list corresponding to the model A, that the second network element does not authorize another network element to obtain the model A, or the model A is not allowed to be got by another network element (namely, another network element other than the second network element), or the second network element does not authorize any network element to obtain the model A. It may be understood that the "another network element" in this embodiment of this application may be another NWDAF network element, or may be any network element in a network other than the second network element. This is not limited in this embodiment of this application. Similarly, the "any network element" in this embodiment of this application may be any NWDAF network element, or may be any network element in the network. For example, there are three NWDAFs in a network system, respectively represented as an NF 1, an NF 2, and an NF 3. The NF 1 stores a model M1, and does not include an allowed NFc list. The ADRF determines that the NF 1 can obtain a model, and the other NWDAFs (for example, the NF 2 and the NF 3) cannot obtain a model.

For example, before step S101, for example, in a network element registration procedure, the first network element (for example, the ADRF) sends a third request to a network repository function (NRF) network element. The third request may be used to notify the NRF network element of an NF profile of the first network element or register the NF profile of the first network element with the NRF network element. The third request may include second indication information indicating that when an allowed NFc list corresponding to a model does not exist, another network element cannot obtain the model. In other words, the second indication information indicates that when the first network element receives a model management storage request, if the model management storage request does not include an allowed NFc list corresponding to a model, model authorization logic of the first network element is that a model producer (for example, the NWDAF containing MTLF) does not authorize another network element to obtain the model, or the model is not allowed to be got by another network element (namely, another network element other than the second network element). The second network element discovers the first network element according to a network element discovery procedure, and may obtain, from the NRF network element, model authorization logic of the first network element used when the allowed NFc list does not exist. Then, the second network element determines, based on the model authorization logic of the first network element and a storage policy of the second network element, to store the model in the first network element, for example, perform step S101. Therefore, after receiving the first request, the first network element may determine, on a basis that the first request does not include the allowed NFc list corresponding to the model A and the locally preconfigured model authorization logic, that the second network element does not authorize another network element to obtain the model A, or the model A is not allowed to be got by another network element (namely, another network element other than the second network element).

Alternatively, before step S101, for example, in a network element registration procedure, the second network element (for example, the NWDAF containing MTLF) sends a third request to a network repository function (NRF) network element. The third request may be used to notify the NRF network element of an NF profile of the second network element or register the NF profile of the second network element with the NRF network element. The third request may include second indication information indicating that when an allowed NFc list corresponding to a model does not exist, another network element cannot obtain the model. In other words, the second indication information indicates that when a model management storage request does not include an allowed NFc list corresponding to a model, model authorization logic of the second network element is that a model producer (for example, the NWDAF containing MTLF) does not authorize another network element to obtain the model, or the model is not allowed to be got by another network element (namely, another network element other than the second network element). The first network element discovers the second network element according to a network element discovery procedure, and may obtain, from the NRF network element, model authorization logic of the second network element used when the allowed NFc list does not exist. Then, after receiving the first request, the first network element may determine, on a basis that the first request does not include the allowed NFc list corresponding to the model A and the model authorization logic of the second network element, that the second network element does not authorize another network element to obtain the model A, or the model A is not allowed to be got by another network element (namely, another network element other than the second network element).

For another example, when it is predefined in a standard protocol that the allowed NFc list corresponding to the model does not exist, it indicates that the model producer (for example, the NWDAF containing MTLF) does not authorize another network element to obtain the model, or the model is not allowed to be got by another network element (namely, another network element other than the model producer). In this case, when the first request does not include the allowed NFc list corresponding to the model A, it may indicate that the second network element does not authorize another network element to obtain the model A, or the model A is not allowed to be got by another network element (namely, another network element other than the second network element). Therefore, after receiving the first request, the first network element may determine, on a basis that the first request does not include the allowed NFc list corresponding to the model A, that the second network element does not authorize another network element to obtain the model A, or the model A is not allowed to be got by another network element (namely, another network element other than the second network element).

In a possible implementation, after the first network element receives the first request, the first network element may store the NF instance ID of the second network element, a model ID of the model A, and the allowed NFc list generated in step S102, to record a correspondence between the NF instance ID of the second network element, the model ID of the model A, and the allowed NFc list generated in step S102, for subsequent use. If the first network element generates a storage transaction ID (Storage Transaction ID) for all models requested to be stored by using the first request, the first network element may further store the Storage Transaction ID, to record a correspondence between the NF instance ID of the second network element, the model ID of the model A, the allowed NFc list, and the Storage Transaction ID, for subsequent use. The Storage Transaction ID may be understood as a credential for one time of storage, and may be used to index a stored model. However, because one or more models may be stored during one time of storage, one or more models may be indexed by using one Storage Transaction ID.

S103: The first network element (for example, the ADRF) sends a first response to the second network element (for example, the NWDAF containing MTLF), where the first response includes the model ID of the model A, or the first response includes the model ID and a storage transaction ID of the model A.

In a possible implementation, the first response is a response returned for the first request. For example, the first response may be Nadrf_MLModelManagement_Storage Response. The first response may include but is not limited to: the model ID of the model A, and an address (for example, a URL 2) of the model A in the first network element. Optionally, if the first network element generates a Storage Transaction ID, the first response may further include the Storage Transaction ID. Certainly, the first response may not include the Storage Transaction ID. In other words, when the first network element generates a Storage Transaction ID, whether the first response carries the Storage Transaction ID is determined by the first network element. This is not limited in this embodiment of this application.

It may be understood that, in this embodiment of this application, when a storage request (namely, the first request) does not carry the allowed NFc list corresponding to the model, the ADRF generates an allowed NFc list for the model, where the allowed NFc list includes the NF instance ID of the second network element. In this way, model authorization check logic of the ADRF may be used, that is, whether an NF instance ID carried in a model retrieval/get request is in the allowed NFc list is determined, to determine an authorization status for the model. Therefore, in this embodiment of this application, a model storage solution is optimized, and model get permissions at two ends that are the first network element and the second network element are aligned (or synchronized).

In a possible implementation, after step S103, if a model is to be retrieved/got from the first network element (for example, the ADRF), the information exchange method shown in FIG. 3 may further include but is not limited to the following steps.

S104: The second network element (for example, the NWDAF containing MTLF) sends a second request to the first network element (for example, the ADRF), where the second request is used to request to obtain the model A, the second request includes an NF instance ID, and the second request further includes the model ID or the storage transaction ID of the model A.

Correspondingly, the first network element (for example, the ADRF) receives the second request.

In a possible implementation, the second request may be used to request to obtain the model A from the first network element. For example, the second request may be Nadrf_MLModelManagement_RetrievalRequest. The second request may include but is not limited to: the NF instance ID, and the model ID or the Storage Transaction ID of the model A. Optionally, the second request further includes an analytics ID of the model A.

In a possible implementation, before the second network element sends the second request to the first network element, the second network element may request an access token (token) from the NRF network element, as shown in step 8a and step 8b in FIG. 2B. Details are not described herein. Correspondingly, the first request further includes the token (token).

"Obtaining a model" in this embodiment of this application may be understood as downloading (or obtaining) a model from the ADRF to local, or may be understood as "retrieving a model (retrieving a model)", "accessing a model", "querying for a model", or the like.

S105: The first network element (for example, the ADRF) verifies whether the NF instance ID carried in the second request is in the allowed NFc list corresponding to the model A.

S106: If the NF instance ID carried in the second request is in the allowed NFc list corresponding to the model A, the first network element (for example, the ADRF) sends a second response to the second network element (for example, the NWDAF containing MTLF), where the second response includes information about the stored model A in the first network element.

Correspondingly, the second network element (for example, the NWDAF containing MTLF) receives the second response. The second response is a response returned for the second request, for example, Nadrf_MLModelManagement_Retrieval Response.

In a possible implementation, after receiving the second request, the first network element may verify whether the NF instance ID carried in the second request is in the allowed NFc list corresponding to the model A, or verify whether the NF instance ID carried in the second request is the same as the NF instance ID of the second network element. When the second request carries the access token (token), the first network element may further verify validity of the token. It may be understood that the first network element may further need to verify other information, which is not listed one by one in this embodiment of this application. If the verification all succeeds, the first network element sends the second response to the second network element, where the second response may include the information about the stored model A in the first network element. For example, the second response includes one or more of the following: a storage address (for example, the URL 2) of the model A in the first network element, or a model file of the model A. Optionally, the second response further includes an ID of the first network element.

For ease of description, in this embodiment of this application, it is assumed that other verification for retrieving/obtaining a model from the first network element (for example, the ADRF) all succeeds. The following mainly focuses on whether the NF instance ID carried in the second request is in the allowed NFc list corresponding to the model A.

In a possible implementation, if the NF instance ID carried in the second request is in the allowed NFc list, the first network element may send the second response to the second network element. It may be understood that the model ID or the Storage Transaction ID carried in the second request may be used to index the model A.

It may be understood that, after step S103, if a third network element (for example, the NWDAF containing AnLF) is intended to retrieve/obtain a model from the first network element (for example, the ADRF), the third network element may also send a second request to the first network element. A model ID or a Storage Transaction ID of the model A carried in the second request may be obtained from the second network element (for example, the NWDAF containing MTLF). A manner for obtaining the model ID or the Storage Transaction ID of the model A is not limited in this embodiment of this application. After receiving the second request, the first network element still verifies whether the NF instance ID carried in the second request is in the allowed NFc list corresponding to the model A. Because an NF instance ID carried in the second request sent by the third network element is not in the allowed NFc list corresponding to the model A, and another network element is not authorized to obtain the model A, the verification fails. When the verification fails, the first network element may reject the second request.

As can be learned from the above, in this embodiment of this application, when a model is stored, an allowed NFc list corresponding to the model is not carried; and when a model is retrieved/got, the model is not returned to another network element other than a model producer (namely, the second network element), and determining logic of the ADRF during model authorization check is pinpointed. This can reduce a model leakage risk caused because the ADRF sends the model to an unauthorized network element when considering, due to inexistence of the allowed NFc list, that the model has no permission restriction, and improve security. In addition, this can further resolve a problem that the model producer (namely, the second network element) cannot obtain the model because the ADRF considers, due to inexistence of the allowed NFc list, that no network element can obtain the model and rejects all retrieval requests.

In a possible implementation, after step S103, if the second network element (for example, the NWDAF containing MTLF) is intended to update or delete the model stored in the first network element (for example, the ADRF), the information exchange method shown in FIG. 3 may further include but is not limited to the following steps.

S107: The second network element (for example, the NWDAF containing MTLF) sends a fourth request to the first network element (for example, the ADRF), where the fourth request is used to request to update or delete the model A, the fourth request includes an NF instance ID, and the fourth request further includes the model ID or the storage transaction ID of the model A.

S108: If the NF instance ID carried in the fourth request is the NF instance ID of the second network element, the first network element (for example, the ADRF) processes the model A based on the fourth request.

In a possible implementation, the fourth request may be used to request to update or delete the model A stored in the first network element. The fourth request may include the NF instance ID, and the fourth request may further include the model ID or the Storage Transaction ID of the model A. The model ID or the Storage Transaction ID may be used to index the model, and may be further used to index the NF instance ID of the second network element. It may be understood that, if the fourth request is used to request to update the model A stored in the first network element, the fourth request further includes: an address of an updated model in the second network element and an updated model ID, and optionally further includes an allowed NFc list of the updated model.

In a possible implementation, before the second network element sends the fourth request to the first network element, the second network element may request an access token (token) from the NRF network element. Details are not described herein. Correspondingly, the fourth request further includes the token (token).

In a possible implementation, after receiving the fourth request, the first network element may verify whether the NF instance ID carried in the fourth request is the NF instance ID of the second network element corresponding to the model ID or the Storage Transaction ID. When the fourth request carries the access token (token), the first network element may further verify validity of the token. If the verification all succeeds, the first network element processes the model A based on the fourth request. In the following embodiments of this application, it is assumed that the verification on the token succeeds.

If the NF instance ID carried in the fourth request is the NF instance ID of the second network element, it indicates that a network element that requests to update/delete a model and a network element that requests to store the model are a same network element. Therefore, the first network element may process, based on the fourth request, the model A corresponding to the model ID or the storage transaction ID. It may be understood that if the fourth request is used to request to update the model A stored in the first network element, the first network element updates the model A based on information in the fourth request. If the fourth request is used to request to delete the model A stored in the first network element, the first network element deletes the model A corresponding to the model ID or the Storage Transaction ID in the fourth request.

It may be understood that an execution sequence of steps S107 and S108 and steps S105 and S106 is not limited in this embodiment of this application. For example, steps S107 and S108 may be performed after steps S105 and S106, or may be performed before steps S105 and S106. This is not limited in this embodiment of this application.

It may be understood that if the fourth request is used to request to delete the model A stored in the first network element, steps S107 and S108 need to be performed after steps S105 and S106. If steps S107 and S108 are performed before steps S105 and S106, the second network element (for example, the NWDAF containing MTLF) cannot obtain the model A from the first network element (for example, the ADRF). In this case, steps S105 and S106 are not necessarily performed. If the fourth request is used to request to update the model A stored in the first network element, steps S107 and S108 may be performed after steps S105 and S106, or may be performed before steps S105 and S106. If steps S107 and S108 are performed before steps S105 and S106, the second response returned in step S106 includes an address of the updated model in the first network element.

In this embodiment of this application, when a storage request (namely, the first request) does not carry the allowed NFc list corresponding to the model, the ADRF generates an allowed NFc list for the model, where the allowed NFc list includes the NF instance ID of the second network element. In this way, a model storage solution is optimized. When a model is retrieved/got, the model is not returned to another network element other than the model producer (that is, the second network element), so that the determining logic of the ADRF during the model authorization check is pinpointed, and the model get permissions at two ends that are the first network element and the second network element are aligned (or synchronized). This can further reduce the model leakage risk and improve security of model getting.

### Embodiment 2

Embodiment 2 of this application mainly states that when an allowed NFc list is not carried in a storage request, it indicates that a model producer (for example, an NWDAF containing MTLF) does not authorize another network element to obtain a model, or the model is not allowed to obtain another network element (namely, another network element other than the model producer), and describes processing logic of an ADRF.

"Obtaining a model" in this embodiment of this application may be understood as downloading (or obtaining) a model from the ADRF to local, or may be understood as "retrieving a model (retrieving a model)", "accessing a model", "querying for a model", or the like.

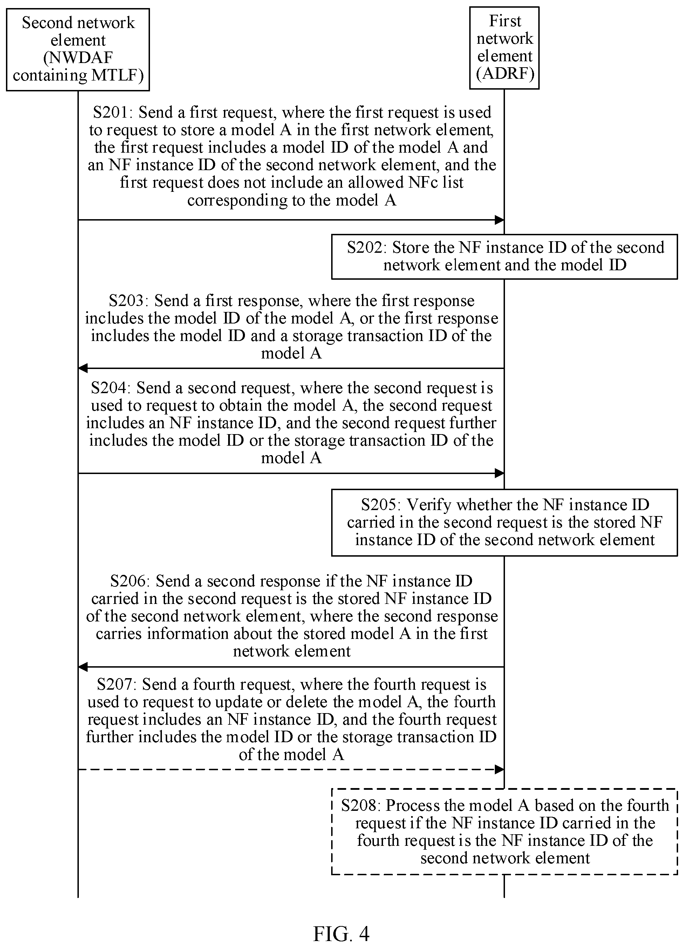

FIG. 4 is a second schematic flowchart of an information exchange method according to an embodiment of this application. In the method, a first network element may be an ADRF, and a second network element may be an NWDAF containing MTLF. Certainly, the second network element may alternatively be an NWDAF containing MTLF and AnLF. This is not limited in this embodiment of this application.

As shown in FIG. 4, the information exchange method includes but is not limited to the following steps.

S201: The second network element (for example, the NWDAF containing MTLF) sends a first request to the first network element (for example, the ADRF), where the first request is used to request to store a model A in the first network element, the first request includes a model ID of the model A and an NF instance ID of the second network element, and the first request does not include an allowed NFc list corresponding to the model A.

Correspondingly, the first network element (for example, the ADRF) receives the first request.

In a possible implementation, for a specific implementation of the first request, refer to the descriptions of step S101 in Embodiment 1. Details are not described herein.

S202: The first network element (for example, the ADRF) stores the NF instance ID of the second network element and the model ID.

In a possible implementation, after receiving the first request, the first network element may obtain (for example, download) the model A from the second network element based on an address (for example, a URL 1) of the model A in the second network element, and store the model A locally. Then, the first network element may store the NF instance ID of the second network element and the model ID of the model A, to record a correspondence between the NF instance ID of the second network element and the model ID of the model A. Alternatively, if the first network element generates a storage transaction identifier (Storage Transaction ID) for all models requested to be stored by using the first request, the first network element may further store the Storage Transaction ID, to record a correspondence between the NF instance ID of the second network element, the model ID of the model A, and the Storage Transaction ID. The Storage Transaction ID may be understood as a credential for one time of storage, and may be used to index a stored model. However, because one or more models may be stored during one time of storage, one or more models may be indexed by using one Storage Transaction ID.

In a possible implementation, the first request further includes first indication information, where the first indication information may indicate that the second network element does not authorize another network element to obtain the model A, or the model A is not allowed to be got by another network element (namely, another network element other than the second network element), or the second network element does not authorize any network element to obtain the model A.

In a possible implementation, after the first network element receives the first request, the information exchange method may further include: The first network element determines, on a basis that the first request does not include the allowed NFc list corresponding to the model A, that the second network element does not authorize another network element to obtain the model A, or the model A is not allowed to be got by another network element (namely, another network element other than the second network element), or the second network element does not authorize any network element to obtain the model A. For a specific determining manner, refer to the descriptions of step S102 in Embodiment 1, and details are not described herein. It may be understood that the "another network element" in this embodiment of this application may be another NWDAF network element, or may be any network element in a network other than the second network element. This is not limited in this embodiment of this application. Similarly, the "any network element" in this embodiment of this application may be any NWDAF network element, or may be any network element in the network.

In a possible implementation, because the first request does not carry the allowed NFc list corresponding to the model A, after receiving the first request, the first network element may generate an allowed NFc list for the model A, where the allowed NFc list is empty. Then, the first network element may further store the generated allowed NFc list, to record a correspondence between the NF instance ID of the second network element, the model ID of the model A, and the allowed NFc list, or record a correspondence between the NF instance ID of the second network element, the model ID of the model A, the allowed NFc list, and the Storage Transaction ID.

S203: The first network element (for example, the ADRF) sends a first response to the second network element (for example, the NWDAF containing MTLF), where the first response includes the model ID of the model A, or the first response includes the model ID and a storage transaction ID of the model A.

Correspondingly, the second network element (for example, the NWDAF containing MTLF) receives the first response.

In a possible implementation, for a specific implementation of the first response, refer to the descriptions of step S103 in Embodiment 1. Details are not described herein.

S204: The second network element (for example, the NWDAF containing MTLF) sends a second request to the first network element (for example, the ADRF), where the second request is used to request to obtain the model A, the second request includes an NF instance ID, and the second request further includes the model ID or the storage transaction ID of the model A.

Correspondingly, the first network element (for example, the ADRF) receives the second request.

In a possible implementation, for an implementation of step S204 in this embodiment of this application, refer to an implementation of step S104 in Embodiment 1. Details are not described herein.

S205: The first network element (for example, the ADRF) verifies whether the NF instance ID carried in the second request is the stored NF instance ID of the second network element.

S206: If the NF instance ID carried in the second request is the stored NF instance ID of the second network element, the first network element (for example, the ADRF) sends a second response to the second network element (for example, the NWDAF containing MTLF), where the second response carries information about the stored model A in the first network element.

Correspondingly, the second network element (for example, the NWDAF containing MTLF) receives the second response.

In a possible implementation, after receiving the second request, the first network element may verify whether the NF instance ID carried in the second request is the NF instance ID of the second network element stored in step S202, or verify whether the NF instance ID carried in the second request is the same as the NF instance ID of the second network element. When the second request carries an access token (token), the first network element may further verify validity of the token. It may be understood that the first network element may further need to verify other information, which is not listed one by one in this embodiment of this application. If the verification all succeeds, the first network element sends the second response to the second network element, where the second response may include the information about the stored model A in the first network element. For example, the second response includes one or more of the following: a storage address (for example, a URL 2) of the model A in the first network element, or a model file of the model A. Optionally, the second response further includes an ID of the first network element.

For ease of description, in this embodiment of this application, it is assumed that other verification for retrieving/obtaining a model from the first network element (for example, the ADRF) succeeds. The following mainly focuses on whether the NF instance ID carried in the second request is the NF instance ID of the second network element stored in step S202.

In a possible implementation, if the NF instance ID carried in the second request is the NF instance ID of the second network element, or the NF instance ID carried in the second request is the same as the NF instance ID of the second network element, the first network element may send the second response to the second network element. It may be understood that the model ID or the Storage Transaction ID carried in the second request may be used to index the model, and may be further used to index the NF instance ID of the second network element (this is because the first network element establishes the correspondence between the model ID, the Storage Transaction ID, and the NF instance ID of the second network element in step S202).

It may be understood that, after step S203, if a third network element (for example, the NWDAF containing AnLF) is intended to retrieve/obtain a model from the first network element (for example, the ADRF), the third network element may also send a second request to the first network element. A model ID or a Storage Transaction ID of the model A carried in the second request may be obtained from the second network element (for example, the NWDAF containing MTLF). A manner for obtaining the model ID or the Storage Transaction ID of the model A is not limited in this embodiment of this application. After receiving the second request, the first network element still verifies whether the NF instance ID carried in the foregoing second request is the NF instance ID of the second network element stored in step S202. Because an NF instance ID carried in the second request sent by the third network element is not the NF instance ID of the second network element, and another network element is not authorized to obtain the model A, the verification fails. When the verification fails, the first network element may reject the second request.

As can be learned from the above, in this embodiment of this application, when a storage request (namely, the first request) does not carry the allowed NFc list corresponding to the model, it indicates that a model producer (namely, the NWDAF containing MTLF) does not authorize another network element to obtain the model, so that a model storage solution can be optimized, and model get permissions at two ends that are the first network element and the second network element are aligned (or synchronized). When a model is retrieved/got, the ADRF does not return the model to another network element other than the model producer (namely, the second network element), and determining logic of the ADRF during model authorization check is pinpointed. This can reduce a model leakage risk caused because the ADRF sends the model to an unauthorized network element when considering, due to inexistence of the allowed NFc list, that the model has no permission restriction, and improve security. In addition, this can further resolve a problem that the model producer (namely, the second network element) cannot access the model because the ADRF considers, due to inexistence of the allowed NFc list, that no network element can access the model and rejects all retrieval requests.

In a possible implementation, after step S203, if the second network element (for example, the NWDAF containing MTLF) is intended to update or delete the model stored in the first network element (for example, the ADRF), the information exchange method shown in FIG. 4 may further include but is not limited to the following steps.

S207: The second network element (for example, the NWDAF containing MTLF) sends a fourth request to the first network element (for example, the ADRF), where the fourth request is used to request to update or delete the model A, the fourth request includes an NF instance ID, and the fourth request further includes the model ID or the storage transaction ID of the model A.

S208: If the NF instance ID carried in the fourth request is the NF instance ID of the second network element, the first network element (for example, the ADRF) processes the model A based on the fourth request.

In a possible implementation, for implementations of step S207 and step S208 in this embodiment of this application, refer to implementations of step S107 and step S108 in Embodiment 1. Details are not described herein.

It may be understood that an execution sequence of steps S207 and S208 and steps S206 and S206 is not limited in this embodiment of this application. For example, steps S207 and S208 may be performed after steps S205 and S206, or may be performed before steps S205 and S206. For details, refer to related descriptions in Embodiment 1. Details are not described herein.

### Embodiment 3

Embodiment 3 of this application mainly states that indication information is carried in a storage request to indicate that all network elements are authorized to obtain a model, and states processing logic of an ADRF.

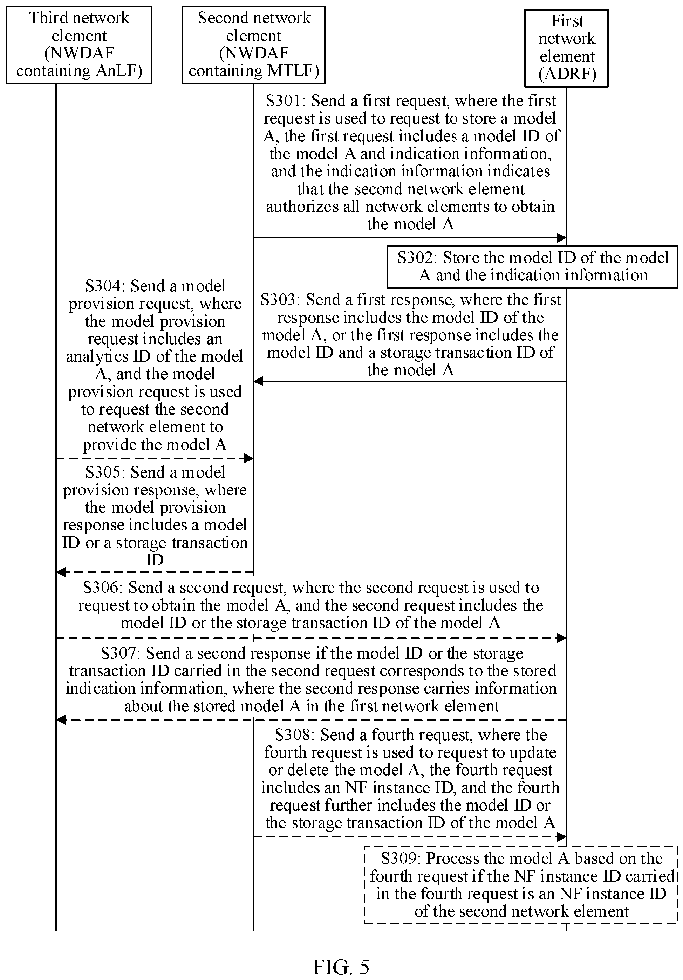

FIG. 5 is a third schematic flowchart of an information exchange method according to an embodiment of this application. In the method, a first network element may be an ADRF, and a second network element may be an NWDAF containing MTLF. Certainly, the second network element may alternatively be an NWDAF containing MTLF and AnLF. This is not limited in this embodiment of this application. A third network element may be an NWDAF containing AnLF.

As shown in FIG. 5, the information exchange method includes but is not limited to the following steps.

S301: The second network element (for example, the NWDAF containing MTLF) sends a first request to the first network element (for example, the ADRF), where the first request is used to request to store a model A, the first request includes a model ID of the model A and indication information, and the indication information indicates that the second network element authorizes all network elements to obtain the model A.

Correspondingly, the first network element (for example, the ADRF) receives the first request.

In a possible implementation, the first request may be used to request to store one or more models in the first network element. For example, the first request may be Nadrf_MLModelManagement_StorageRequest. The first request may include but is not limited to: an NF instance ID (NF instance ID) of the second network element, a model identifier (that is, a model ID) of each model in the one or more models, and an address (which is represented by using a URL) of each model in the second network element. Optionally, the first request further includes one or more pieces of indication information. For ease of description, in this embodiment of this application, the following uses an example in which the model A is stored in the first network element. In this case, the first request may include but is not limited to: the NF instance ID of the second network element, the model ID of the model A, an address (for example, a URL 1) of the model A in the second network element, and indication information corresponding to the model A. The indication information may indicate that the second network element authorizes all the network elements to obtain the model A, or indicate that the model A is allowed to be got by all the network elements. "All network elements" in this embodiment of this application may be all NWDAF network elements, or any network element in a network. This is not limited in this embodiment of this application. In other words, for the model A, during model getting or model retrieval, the ADRF does not need to verify a model get permission of an NFc, and a corresponding model may be got, provided that the NFc provides a model getting index (for example, a model ID or a storage transaction ID).

In a possible implementation, the first request may further include an allowed NFc list corresponding to the model A. In a possible implementation, the indication information may be carried in the allowed NFc list corresponding to the model A. In this case, to reduce overheads, the allowed NFc list may not include the NF instance ID. In another possible implementation, the indication information may be a separate information element. In this case, to reduce overheads, the first request may not include the allowed NFc list corresponding to the model A.

S302: The first network element (for example, the ADRF) stores the model ID of the model A and the indication information.

In a possible implementation, after receiving the first request, the first network element may obtain (for example, download) the model A from the second network element based on the address (for example, the URL 1) of the model A in the second network element, and store the model A locally. Then, the first network element may store the model ID of the model A and the indication information, to record a correspondence between the model ID of the model A and the indication information. Alternatively, if the indication information is carried in the allowed NFc list corresponding to the model A, the first network element may store the model ID and the allowed NFc list corresponding to the model A. If the first network element generates a storage transaction identifier (Storage Transaction ID) for all models requested to be stored by using the first request, the first network element may further store the Storage Transaction ID, to record a correspondence between the model ID of the model A, the Storage Transaction ID, and the indication information (or the allowed NFc list). That the first network element stores the indication information may be understood as that the first network element stores content indicated by the indication information carried in the first request. In other words, the indication information stored in the first network element may not be an information element that is in the first request and that carries the indication information, but the content actually indicated by the indication information.

In a possible implementation, the first network element may further store the NF instance ID of the second network element, to record a correspondence between the NF instance ID of the second network element, the model ID of the model A, and the indication information, or record a correspondence between the NF instance ID of the second network element, the model ID of the model A, the Storage Transaction ID, and the indication information, for subsequent use.

S303: The first network element (for example, the ADRF) sends a first response to the second network element (for example, the NWDAF containing MTLF), where the first response includes the model ID of the model A, or the first response includes the model ID and a storage transaction ID of the model A.

In a possible implementation, for a specific implementation of the first response, refer to the descriptions of step S103 in Embodiment 1. Details are not described herein.

In this embodiment of this application, the indication information of the model is carried in a storage request (namely, the first request), to indicate that all network elements can obtain the model. In this way, a model storage solution is optimized, and model get permissions at two ends that are the first network element and the second network element are aligned (or synchronized).

In a possible implementation, after step S303, if the third network element needs to retrieve/obtain a model from the first network element (for example, the ADRF), the information exchange method shown in FIG. 5 may further include but is not limited to the following steps.

S304: The third network element (for example, the NWDAF containing AnLF) sends a model provision request to the second network element (for example, the NWDAF containing MTLF), where the model provision request includes an analytics ID of the model A, and the model provision request is used to request the second network element to provide the model A.

Correspondingly, the second network element (for example, the NWDAF containing MTLF) receives the model provision request.

S305: The second network element (for example, the NWDAF containing MTLF) sends a model provision response to the third network element (for example, the NWDAF containing AnLF), where the model provision response includes a model ID or a storage transaction ID.

Correspondingly, the third network element (for example, the NWDAF containing AnLF) receives the model provision response.

In a possible implementation, the model provision request may include but is not limited to the analytics ID of the model A, and optionally further include a vendor ID (vendor ID) of the third network element and/or a getting token. The model provision request may be used to request the second network element to provide the model A. For example, the model provision request may be an Nnwdaf_MLModelProvision Request.

In a possible implementation, after receiving the model provision request, the second network element may determine, based on the model provision request and internal logic, a model ID of a specific model to be authorized to the third network element, and then return a model provision response to the third network element. The model provision response may include a model ID or a storage transaction ID, and optionally further include an ID of the first network element.

For example, the second network element first determines a model that is in (one or more) models corresponding to an analytics ID carried in the model provision request and that the third network element is authorized to obtain, checks whether the model that the third network element is authorized to obtain has a storage transaction ID, and if the model that the third network element is authorized to obtain has a storage transaction ID, determines whether the third network element is authorized to obtain all (one or more) models corresponding to the storage transaction ID. If the third network element is authorized to obtain all the (one or more) models corresponding to the storage transaction ID, the storage transaction ID may be carried in the model provision response. Optionally, the model provision response further includes an ID of the model that is in the (one or more) models corresponding to the analytics ID and that the third network element is authorized to obtain. In other cases, a model ID is carried in the model provision response. For example, if the (one or more) models corresponding to the storage transaction ID include a model that the third network element is not authorized to obtain, the ID of the model that is in the (one or more) models corresponding to the analytics ID and that the third network element is authorized to obtain may be carried in the model provision response.

It may be understood that, although the model provision request carries the analytics ID of the model A, because the analytics ID is used to identify a function of a model, and there may be a plurality of models having a same function, the analytics ID carried in the model provision request may correspond to one or more models, and the one or more models include the model A. In addition, one storage transaction ID may be understood as a credential for one time of storage, and one or more models may be stored in one time of storage. Therefore, one or more models may be indexed by using one storage transaction ID.

For example, it is assumed that the analytics ID carried in the model provision request corresponds to three models, namely, a model A, a model B, and a model C. Then, it is assumed that the second network element determines, based on the internal logic, that the third network element is authorized to obtain the model A and the model B, the model A corresponds to a storage transaction ID 1, and the model B corresponds to a storage transaction ID 2. It is assumed that the storage transaction ID 1 corresponds to only the model A, and the storage transaction ID 2 corresponds to the model B and a model D. Because the model A may be got by all network elements, the storage transaction ID 1 may be carried in the model provision response. If the third network element is authorized to obtain both the model B and the model D, the storage transaction ID 2 may also be carried in the model provision response. In other words, in this case, the model provision response includes the storage transaction ID 1 and the storage transaction ID 2. However, if the third network element is not authorized to obtain the model D, a model ID of the model B and the storage transaction ID 1 should be carried in the model provision response, or the model ID of the model A and the model ID of the model B are carried in the model provision response.

S306: The third network element (for example, the NWDAF containing AnLF) sends a second request to the first network element (for example, the ADRF), where the second request is used to request to obtain the model A, and the second request includes the model ID or the storage transaction ID of the model A.

Correspondingly, the first network element (for example, the ADRF) receives the second request.

In a possible implementation, for an implementation of step S306 in this embodiment of this application, refer to an implementation of step S104 in Embodiment 1. Details are not described herein.

S307: If the model ID or the storage transaction ID carried in the second request corresponds to the stored indication information, the first network element (for example, the ADRF) sends a second response to the third network element (for example, the NWDAF containing AnLF), where the second response carries information about the stored model A in the first network element.

Correspondingly, the third network element (for example, the NWDAF containing AnLF) receives the second response.

In a possible implementation, after receiving the second request, the first network element may verify, based on the content stored in step S202, whether the model ID or the storage transaction ID carried in the second request corresponds to the indication information. If the model ID or the storage transaction ID carried in the second request corresponds to the stored indication information, because the indication information indicates that all network elements can obtain the model A, the first network element may send the second response to the third network element. In another possible implementation, if the indication information is carried in the allowed NFc list corresponding to the model A, after receiving the second request, the first network element may verify an allowed NFc list corresponding to the model ID or the storage transaction ID carried in the second request. If the indication information exists in the allowed NFc list, the first network element may send the second response to the third network element. For an implementation of the second response, refer to the descriptions in Embodiment 1. Details are not described herein.

It may be understood that the model ID or the storage transaction ID carried in the second request may be used to index the model, and may be further used to index the indication information (this is because the first network element establishes the correspondence between the model ID, the storage transaction ID, and the indication information in step S302).

It may be further understood that when the second request carries an access token (token), the first network element may further verify validity of the token. If the verification all succeeds, the first network element sends the second response to the second network element.

It may be understood that if the third network element and the second network element are a same network element, step S304 and step S305 may not be performed.

In this embodiment of this application, the indication information is carried in the storage request (that is, the first request), to indicate that all network elements can obtain a model. During retrieval, a permission of the model is determined. If the permission of the model is that the model is allowed to be got by all network elements, the model is returned. In this way, determining logic of the first network element during model authorization check is pinpointed, the model storage solution is optimized, and model get permissions at two ends that are the first network element and the second network element are aligned (or synchronized).

In a possible implementation, after step S303, if the second network element (for example, the NWDAF containing MTLF) is intended to update or delete the model stored in the first network element (for example, the ADRF), the information exchange method shown in FIG. 5 may further include but is not limited to the following steps.

S308: The second network element (for example, the NWDAF containing MTLF) sends a fourth request to the first network element (for example, the ADRF), where the fourth request is used to request to update or delete the model A, the fourth request includes an NF instance ID, and the fourth request further includes the model ID or the storage transaction ID of the model A.

Correspondingly, the first network element (for example, the ADRF) receives the fourth request.

S309: If the NF instance ID carried in the fourth request is the NF instance ID of the second network element, the first network element (for example, the ADRF) processes the model A based on the fourth request.

In a possible implementation, for implementations of step S308 and step S309 in this embodiment of this application, refer to implementations of step S107 and step S108 in Embodiment 1. Details are not described herein.

It may be understood that an execution sequence of steps S308 and S309 and steps S304 to S307 is not limited in this embodiment of this application. For example, steps S308 and S309 may be performed after steps S304 to S307, or may be performed before steps S304 to S307. For details, refer to related descriptions in Embodiment 1. Details are not described herein.

### Embodiment 4

Embodiment 4 of this application mainly states that when an allowed NFc list is not carried in a storage request, it indicates that a model producer (for example, an NWDAF containing MTLF) authorizes all network elements to obtain a model, and describes processing logic of an ADRF.

"Obtaining a model" in this embodiment of this application may be understood as downloading (or obtaining) a model from the ADRF to local, or may be understood as "retrieving a model (retrieving a model)" or "accessing a model".

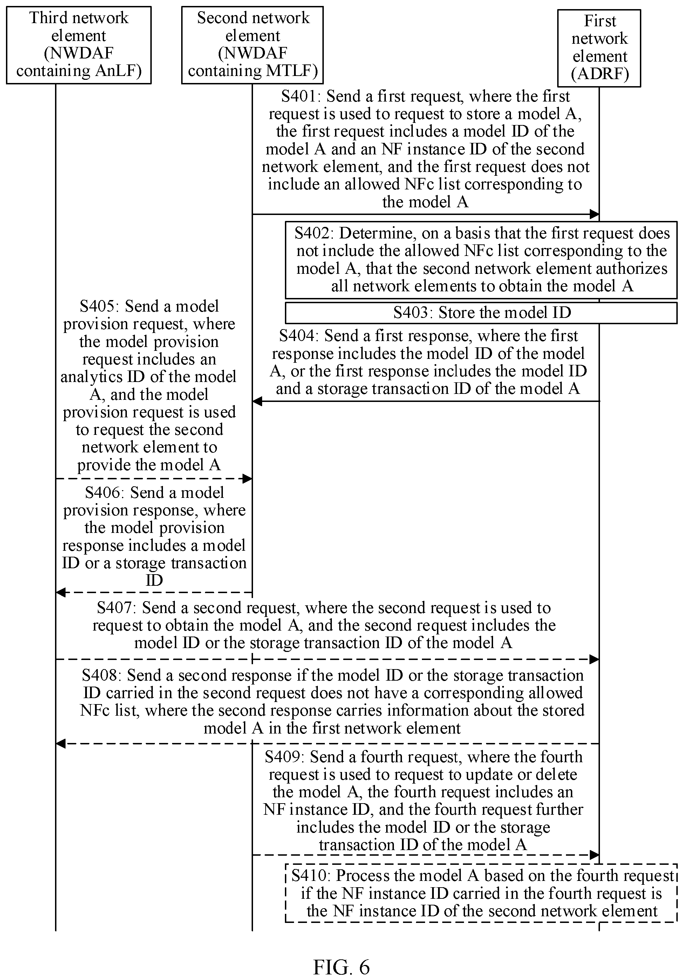

FIG. 6 is a fourth schematic flowchart of an information exchange method according to an embodiment of this application. In the method, a first network element may be an ADRF, and a second network element may be an NWDAF containing MTLF. Certainly, the second network element may alternatively be an NWDAF containing MTLF and AnLF. This is not limited in this embodiment of this application. A third network element may be an NWDAF containing AnLF.

As shown in FIG. 6, the information exchange method includes but is not limited to the following steps.

S401: The second network element (for example, the NWDAF containing MTLF) sends a first request to the first network element (for example, the ADRF), where the first request is used to request to store a model A, the first request includes a model ID of the model A and an NF instance ID of the second network element, and the first request does not include an allowed NFc list corresponding to the model A.

Correspondingly, the first network element (for example, the ADRF) receives the first request.

In a possible implementation, for an implementation of step S401 in this embodiment of this application, refer to an implementation of step S101 in Embodiment 1. Details are not described herein.

S402: The first network element (for example, the ADRF) determines, on a basis that the first request does not include the allowed NFc list corresponding to the model A, that the second network element authorizes all network elements to obtain the model A.

In a possible implementation, before step S401, for example, in a network element registration procedure, the first network element (for example, the ADRF) sends a third request to a network repository function (NRF) network element. The third request may be used to notify the NRF network element of an NF profile of the first network element or register the NF profile of the first network element with the NRF network element. The third request may include indication information a indicating that when an allowed NFc list corresponding to a model does not exist, all network elements can obtain the model. In other words, the indication information a indicates that when the first network element receives a model management storage request, if the model management storage request does not include an allowed NFc list corresponding to a model, model authorization logic of the first network element is that a model producer (for example, the NWDAF containing MTLF) authorizes all network elements to obtain the model, or the model is allowed to be got by all network elements. The second network element discovers the first network element according to a network element discovery procedure, and may obtain, from the NRF network element, model authorization logic of the first network element used when the allowed NFc list does not exist. Then, the second network element determines, based on the model authorization logic of the first network element and a storage policy of the second network element, to store the model in the first network element, that is, perform step S101. Therefore, after receiving the first request, the first network element may determine, on a basis that the first request does not include the allowed NFc list corresponding to the model A and the locally preconfigured model authorization logic, that the second network element authorizes all network elements to obtain the model A, or the model A is allowed to be got by all network elements.

Alternatively, before step S401, for example, in a network element registration procedure, the second network element (for example, the NWDAF containing MTLF) sends a third request to a network repository function (NRF) network element. The third request may be used to notify the NRF network element of an NF profile of the second network element or register the NF profile of the second network element with the NRF network element. The third request may include indication information a indicating that when an allowed NFc list corresponding to a model does not exist, all network elements can obtain the model. In other words, the indication information a indicates that when a model management storage request does not include an allowed NFc list corresponding to a model, model authorization logic of the second network element is that a model producer (for example, the NWDAF containing MTLF) authorizes all network elements to obtain the model, or the model is allowed to be got by all network elements. The first network element discovers the second network element according to a network element discovery procedure, and may obtain, from the NRF network element, model authorization logic of the second network element used when the allowed NFc list does not exist. Then, after receiving the first request, the first network element may determine, on a basis that the first request does not include the allowed NFc list corresponding to the model A and the model authorization logic of the second network element, that the second network element authorizes all network elements to obtain the model A, or the model A is allowed to be accessed by all network elements.

In another possible implementation, when it is predefined in a standard protocol that the allowed NFc list corresponding to the model does not exist, it indicates that the model producer (for example, the NWDAF containing MTLF) authorizes all network elements to obtain the model, or the model is allowed to be got by all network elements. In this case, when the first request does not include the allowed NFc list corresponding to the model A, it may indicate that the second network element authorizes all network elements to obtain the model A. Therefore, after receiving the first request, the first network element may determine, on a basis that the first request does not include the allowed NFc list corresponding to the model A, that the second network element authorizes all network elements to obtain the model A, or the model A is allowed to be got by all network elements.

It may be understood that "all network elements" in this embodiment of this application may be all NWDAF network elements, or any network element in a network. This is not limited in this embodiment of this application. In other words, for the model A, during model getting or model retrieval, the ADRF does not need to verify a model get permission of an NFc, and a corresponding model may be got, provided that the NFc provides a model getting index (for example, a model ID or a storage transaction ID).

S403: The first network element (for example, the ADRF) stores the model ID.

In a possible implementation, after receiving the first request, the first network element may obtain (for example, download) the model A from the second network element based on an address (for example, a URL 1) of the model A in the second network element, and store the model A locally. Then, the first network element may store the model ID of the model A. If the first network element generates a storage transaction identifier (Storage Transaction ID) for all models requested to be stored by using the first request, the first network element may further store the Storage Transaction ID, to record a correspondence between the model ID of the model A and the Storage Transaction ID.

In a possible implementation, the first network element may further store the NF instance ID of the second network element, to record a correspondence between the NF instance ID of the second network element, and the model ID of the model A, or record a correspondence between the NF instance ID of the second network element, the model ID of the model A, and the Storage Transaction ID, for subsequent use.

S404: The first network element (for example, the ADRF) sends a first response to the second network element (for example, the NWDAF containing MTLF), where the first response includes the model ID of the model A, or the first response includes the model ID and a storage transaction ID of the model A.

In a possible implementation, for an implementation of step S404 in this embodiment of this application, refer to an implementation of step S103 in Embodiment 1. Details are not described herein.

In this embodiment of this application, when a storage request (namely, the first request) does not carry the allowed NFc list corresponding to the model, it indicates that the model producer (namely, the NWDAF containing MTLF) authorizes all network elements to obtain the model, so that a model storage solution is optimized, and model get permissions at two ends that are the first network element and the second network element are aligned (or synchronized).

In a possible implementation, after step S404, if a model is to be retrieved/got from the first network element (for example, the ADRF), the information exchange method shown in FIG. 6 may further include but is not limited to the following steps.

S405: The third network element (for example, the NWDAF containing AnLF) sends a model provision request to the second network element (for example, the NWDAF containing MTLF), where the model provision request includes an analytics ID of the model A, and the model provision request is used to request the second network element to provide the model A.

Correspondingly, the second network element (for example, the NWDAF containing MTLF) receives the model provision request.

S406: The second network element (for example, the NWDAF containing MTLF) sends a model provision response to the third network element (for example, the NWDAF containing AnLF), where the model provision response includes a model ID or a storage transaction ID.

Correspondingly, the third network element (for example, the NWDAF containing AnLF) receives the model provision response.

In a possible implementation, for implementations of step S405 and step S406 in this embodiment of this application, refer to implementations of step S304 and step S305 in Embodiment 3. Details are not described herein.

S407: The third network element (for example, the NWDAF containing AnLF) sends a second request to the first network element (for example, the ADRF), where the second request is used to request to obtain the model A, and the second request includes the model ID or the storage transaction ID of the model A.

Correspondingly, the first network element (for example, the ADRF) receives the second request.

In a possible implementation, for an implementation of step S407 in this embodiment of this application, refer to an implementation of step S104 in Embodiment 1. Details are not described herein.

S408: If the model ID or the storage transaction ID carried in the second request does not have a corresponding allowed NFc list, the first network element (for example, the ADRF) sends a second response to the third network element (for example, the NWDAF containing AnLF), where the second response carries information about the stored model A in the first network element.

Correspondingly, the third network element (for example, the NWDAF containing AnLF) receives the second response.

In a possible implementation, after receiving the second request, the first network element may verify whether an allowed NFc list corresponding to the model ID or the storage transaction ID carried in the second request is locally stored. If the model ID or the storage transaction ID carried in the second request does not have a corresponding allowed NFc list, it indicates that all network elements are authorized to obtain the model A corresponding to the model ID or the storage transaction ID. In this case, the first network element may send the second response to the third network element. For an implementation of the second response, refer to the descriptions in Embodiment 1. Details are not described herein. It may be understood that the first network element may further need to verify other information. When verification all succeeds, the first network element returns the second response to the third network element. This is not limited in this embodiment of this application.

It may be understood that if the third network element and the second network element are a same network element, step S405 and step S406 may not be performed.

In this embodiment of this application, when a storage request (namely, the first request) does not carry the allowed NFc list corresponding to the model, it indicates that the model producer (namely, the NWDAF containing MTLF) authorizes all network elements to obtain the model, so that a model storage solution is optimized. During retrieval, the first network element determines a permission of the model, and if the permission of the model is that the model is allowed to be got by all network elements, the model is returned. In this way, determining logic of the first network element during model authorization check is pinpointed, the model storage solution is optimized, and model get permissions at two ends that are the first network element and the second network element are aligned (or synchronized).

In a possible implementation, after step S404, if the second network element (for example, the NWDAF containing MTLF) is intended to update or delete the model stored in the first network element (for example, the ADRF), the information exchange method shown in FIG. 6 may further include but is not limited to the following steps.

S409: The second network element (for example, the NWDAF containing MTLF) sends a fourth request to the first network element (for example, the ADRF), where the fourth request is used to request to update or delete the model A, the fourth request includes an NF instance ID, and the fourth request further includes the model ID or the storage transaction ID of the model A.

Correspondingly, the first network element (for example, the ADRF) receives the fourth request.

S410: If the NF instance ID carried in the fourth request is the NF instance ID of the second network element, the first network element (for example, the ADRF) processes the model A based on the fourth request.

In a possible implementation, for implementations of step S409 and step S410 in this embodiment of this application, refer to implementations of step S107 and step S108 in Embodiment 1. Details are not described herein.

It may be understood that the NWDAF containing MTLF may retrain the model or generate a new model based on internal logic of the NWDAF containing MTLF. However, after the model is retrained or the new model is generated, how to set a get permission of the model when the model is stored in the ADRF needs to be resolved.

### Embodiment 5

Embodiment 5 of this application mainly describes how to set, after an NWDAF containing MTLF performs retraining to get or generate a new model, a get permission of the model.

It may be understood that Embodiment 5 of this application may be implemented in combination with any one of Embodiment 1 to Embodiment 4, or may be separately implemented. This is not limited in this application.

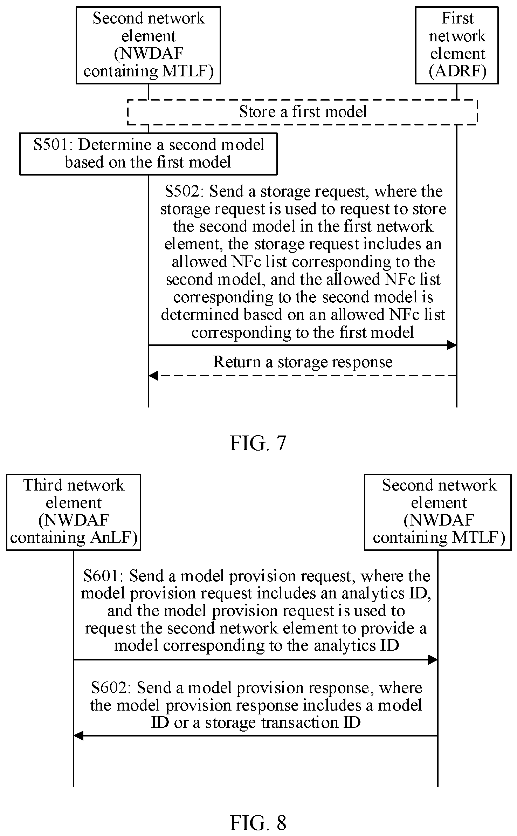

FIG. 7 is a fifth schematic flowchart of an information exchange method according to an embodiment of this application. In the method, a first network element may be an ADRF, and a second network element may be an NWDAF containing MTLF. Certainly, the second network element may alternatively be an NWDAF containing MTLF and AnLF. This is not limited in this embodiment of this application.

As shown in FIG. 7, the information exchange method includes but is not limited to the following steps.

S501: The second network element (for example, the NWDAF containing MTLF) determines a second model based on a first model.

S502: The second network element (for example, the NWDAF containing MTLF) sends a storage request to the first network element (for example, the ADRF), where the storage request is used to request to store the second model in the first network element, the storage request includes an allowed NFc list corresponding to the second model, and the allowed NFc list corresponding to the second model is determined based on an allowed NFc list corresponding to the first model.

Correspondingly, the first network element (for example, the ADRF) receives the storage request.

In a possible implementation, the second network element re-provides the second model based on accuracy of the first model. For example, if the second network element finds, based on internal logic of the second network element, that the accuracy of the first model is lower than a preset threshold, or the first model cannot continue to meet a requirement of a model consumer (for example, an NWDAF containing AnLF), the second network element may retrain the first model to obtain the second model, or generate a new model, namely, the second model. For example, a model M1 is a model initially trained by the second network element for the third network element (for example, an NWDAF containing AnLF). Then, the second network element detects that some special cases, for example, a special time period, a holiday, and an early peak, are significantly different from a common scenario, the second network element additionally trains a new model M2 for this case, or retrains the model M1 to obtain the model M2. However, the model M1 is not completely disabled. Therefore, the third network element uses the model M1 in a general case, and the model M2 in a special case. In this way, the third network element may achieve better model performance.

In a possible implementation, after the second network element obtains the second model, the second network element may send a storage request 1 to the first network element. The storage request 1 may be used to request to store the second model in the first network element. The storage request 1 may include but is not limited to: an NF instance ID of the second network element, a model ID of the second model, an address of the second model in the second network element, and the allowed NFc list corresponding to the second model. Correspondingly, the first network element may return a storage response 1 to the second network element. The allowed NFc list corresponding to the second model is determined based on the allowed NFc list corresponding to the first model. For example, the allowed NFc list corresponding to the second model is the same as the allowed NFc list corresponding to the first model. In other words, when the second network element determines that a model consumer of the first model is consistent with that of the second model, the second network element may use the allowed NF consumer list corresponding to the first model as the allowed NF consumer list corresponding to the second model. For another example, the second network element determines that the allowed NFc list corresponding to the first model is an allowed NFc list 1, where the allowed NFc list 1 includes all current consumer network elements of the first model. Then, the second network element generates the second model based on the internal logic. In this case, due to a network configuration change or a business relationship change, the new model (namely, the second model) generated by the second network element no longer provides a service for some network elements. In this case, the allowed NFc list corresponding to the second model may be a subset of the allowed NFc list corresponding to the first model. Alternatively, several consumer network elements are added to the new model (namely, the second model) generated by the second network element. In this case, the allowed NFc list corresponding to the second model may include the allowed NFc list corresponding to the first model and the newly added consumer network elements.

In a possible implementation, before the second network element sends the storage request to the first network element, the second network element may further store the first model in the first network element. For example, the second network element sends a storage request 2 to the first network element. The storage request 2 may be used to request to store the first model in the first network element. The storage request 2 may include but is not limited to: the NF instance ID of the second network element, a model ID of the first model, and an address of the first model in the second network element. Correspondingly, the first network element may return a storage response 2 to the second network element. Optionally, the storage request 2 further includes an allowed NFc list corresponding to the first model. It may be understood that, if the storage request 2 does not include the allowed NFc list corresponding to the first model, after the second network element stores the first model in the first network element, the second network element may add the allowed NFc list corresponding to the first model to the first network element by performing a model management storage update operation (for example, sending an Nadrf_MLModelManagement_StorageUpdate message).

In this embodiment of this application, when get permissions of two models (for example, the first model and the second model) are the same, an allowed NFc list of a previously stored model (namely, the first model) is used to replace an allowed NFc list of a newly generated model (namely, the second model), so that a manner of setting a model get permission in a retraining scenario is pinpointed/optimized.

Currently, in a conventional technology, when an NFc (for example, the NWDAF containing AnLF) requests an NFp (namely, the NWDAF containing MTLF) to provide a model, the NFp (namely, the NWDAF containing MTLF) may return a Storage transaction ID or a model ID. However, processing logic for the side of the NFp (namely, the NWDAF containing MTLF) to return the Storage transaction ID or the model ID is not pinpointed.

### Embodiment 6

Embodiment 6 of this application mainly describes processing logic for a side of an NFp (namely, an NWDAF containing MTLF) to return a Storage transaction ID or a model ID.

It may be understood that Embodiment 6 of this application may be implemented in combination with any one of Embodiment 1 to Embodiment 4, or may be implemented in combination with Embodiment 5, or certainly may be separately implemented. This is not limited in this application.

FIG. 8 is a sixth schematic flowchart of an information exchange method according to an embodiment of this application. In the method, a second network element may be an NWDAF containing MTLF. Certainly, the second network element may alternatively be an NWDAF containing MTLF and AnLF. This is not limited in this embodiment of this application. A third network element may be an NWDAF containing AnLF.

As shown in FIG. 8, the information exchange method includes but is not limited to the following steps.

S601: The third network element (for example, the NWDAF containing AnLF) sends a model provision request to the second network element (for example, the NWDAF containing MTLF), where the model provision request includes an analytics ID, and the model provision request is used to request the second network element to provide a model corresponding to the analytics ID.

Correspondingly, the second network element (for example, the NWDAF containing MTLF) receives the model provision request.

S602: The second network element (for example, the NWDAF containing MTLF) sends a model provision response to the third network element (for example, the NWDAF containing AnLF), where the model provision response includes a model ID or a storage transaction ID.

Correspondingly, the third network element (for example, the NWDAF containing AnLF) receives the model provision response.

In a possible implementation, the model provision request may include but is not limited to the analytics ID, and optionally further include a vendor ID (vendor ID) of the third network element and/or an access token. The model provision request may be used to request the second network element to provide the model corresponding to the analytics ID. For example, the model provision request may be an Nnwdaf_MLModelProvision Request.

In a possible implementation, the analytics ID may correspond to one or more storage transaction identifiers. It may be understood that the analytics identifier may be used to identify a function/an effect of a model, and there may be a plurality of models configured to implement a same function. Therefore, one analytics identifier may correspond to one or more models. One storage transaction identifier may be understood as a credential for one time of storage, and one or more models may be stored during one time of storage. Therefore, one or more models may be indexed by using one storage transaction identifier. Therefore, a correspondence between the analytics identifier and the storage transaction identifier may be generated through a model. For example, one analytics identifier may correspond to one or more storage transaction identifiers.

In a possible implementation, after receiving the model provision request, the second network element may determine, based on the model provision request and internal logic, a specific model that is in the models corresponding to the analytics ID and that the third network element is authorized to obtain, and then return a model provision response to the third network element. The model provision response may include a model ID or a storage transaction ID, and optionally further include an ID of a first network element (for example, an ADRF).

For example, the second network element first determines a model that is in (one or more) models corresponding to an analytics ID carried in the model provision request and that the third network element is authorized to obtain, checks whether the model that the third network element is authorized to obtain has a storage transaction ID, and if the model that the third network element is authorized to obtain has a storage transaction ID, determines whether the third network element is authorized to obtain all (one or more) models corresponding to the storage transaction ID. If the third network element is authorized to obtain all the (one or more) models corresponding to the storage transaction ID, the storage transaction ID may be carried in the model provision response. In other cases, the model ID may be carried in the model provision response. For example, if the (one or more) models corresponding to the storage transaction ID include a model that the third network element is not authorized to obtain, the ID of the model that is in the (one or more) models corresponding to the analytics ID and that the third network element is authorized to obtain may be carried in the model provision response. For another example, if a model that is in the (one or more) models corresponding to the analytics ID that the third network element is authorized to obtain has no storage transaction ID, the ID of the model that is in the (one or more) models corresponding to the analytics ID and that the third network element is authorized to obtain may be carried in the model provision response.

In this embodiment of this application, when the third network element is authorized to obtain all models corresponding to a storage transaction ID of a model that is in the models corresponding to the analytics ID and that the third network element is authorized to obtain, the storage transaction ID is returned to the third network element; otherwise, a model ID that is in the models corresponding to the analytics ID and that the third network element is authorized to obtain is returned to the third network element. This pinpoints processing logic for the second network element to return the Storage transaction ID or the model ID, and can reduce a risk that the third network element obtains the model from the first network element (for example, the ADRF) by using the Storage transaction ID in an unauthorized manner.

This is because in a conventional technology, when the model that is in the models corresponding to the analytics ID and that the third network element is authorized to obtain has a storage transaction ID, the second network element returns the storage transaction ID to the third network element. However, the storage transaction ID may be used to index a plurality of models, and a model that the third network element is not authorized to obtain exists in the plurality of models. In this case, when the third network element retrieves/obtains a model by using the storage transaction ID obtained from the second network element, the first network element (for example, the ADRF) may return all the models corresponding to the storage transaction ID to the third network element. For example, the second network element stores a model M1, a model M2, and a model M3 in the first network element (for example, the ADRF), and storage transaction IDs of the three models are a Storage Transaction ID 1. Analytics IDs of the model M1 and the model M2 are an analytics ID 1, and an analytics ID of the model M3 is an analytics ID 2. During storage, an allowed NFc list corresponding to the model M3 does not exist. It is assumed that when the allowed NFc list does not exist, determining logic of the first network element during model authorization check is that other network elements can each obtain a model. In the conventional technology, the third network element requests, by using the analytics ID 1, the second network element to provide a model corresponding to the analytics ID 1. Assuming that the third network element is authorized to obtain both the model M1 and the model M2, because the model M1 and the model M2 correspond to a storage transaction ID, the second network element returns the Storage Transaction ID 1 to the third network element. In this case, when the third network element retrieves/obtains a model from the first network element by using the Storage Transaction ID 1, the first network element returns the model M1, the model M2, and the model M3 to the third network element. However, actually, the second network element does not authorize the third network element to obtain the model M3. Therefore, the third network element obtains the model M3 in an unauthorized manner, and there is a model leakage risk.

However, in this embodiment of this application, when the third network element is not authorized to obtain all models corresponding to a storage transaction ID, the second network element does not return the storage transaction ID to the third network element, so that the model leakage risk can be reduced.

Currently, in the conventional technology, an NFc (for example, the NWDAF containing AnLF) is allowed to retrieve/obtain a model by using a Storage transaction ID, but processing logic used after the ADRF side receives the Storage transaction ID is not pinpointed.

### Embodiment 7

Embodiment 7 of this application mainly describes processing logic used after an ADRF side receives a Storage transaction ID when an NFc (for example, an NWDAF containing AnLF) retrieves/obtains a model by using the Storage transaction ID.

It may be understood that, this embodiment of this application may be implemented in combination with Embodiment 6, or may be separately implemented. This is not limited in this application. When this embodiment of this application is implemented in combination with Embodiment 6, this embodiment of this application is implemented after Embodiment 6. In other words, in this embodiment of this application, a third network element may obtain a storage transaction identifier from a second network element according to the method provided in Embodiment 6, or may obtain a storage transaction identifier from a second network element in another manner. This is not limited in this application.

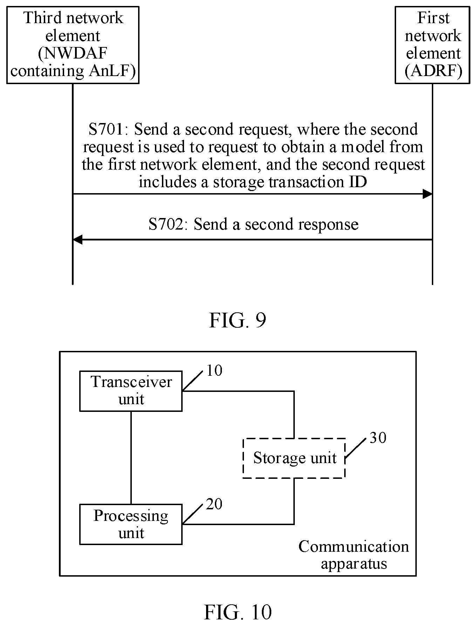

FIG. 9 is a sixth schematic flowchart of an information exchange method according to an embodiment of this application. In the method, a first network element may be an ADRF, and the third network element may be an NWDAF containing AnLF.

As shown in FIG. 9, the information exchange method includes but is not limited to the following steps.

S701: The third network element (for example, the NWDAF containing AnLF) sends a second request to the first network element (for example, the ADRF), where the second request is used to request to obtain a model from the first network element, and the second request includes a storage transaction ID.

Correspondingly, the first network element (for example, the ADRF) receives the second request.

S702: The first network element (for example, the ADRF) sends a second response to the third network element (for example, the NWDAF containing AnLF). Correspondingly, the third network element (for example, the NWDAF containing AnLF) receives the second response.

In a possible implementation, the second request may be used to request to obtain a model from the first network element. For example, the second request may be Nadrf_MLModelManagement_ RetrievalRequest. The second request may include but is not limited to the storage transaction ID. The storage transaction ID may be obtained by the third network element from the second network element (for example, an NWDAF containing MTLF) by using a model provision request (for example, an Nnwdaf_MLModelProvision Request). A specific getting manner is not limited in this embodiment of this application. For example, refer to Embodiment 5. Details are not described herein. Certainly, another manner may also be used.

In a possible implementation, after receiving the second request, the first network element may return the second response to the third network element. If a model that the third network element is authorized to obtain exists in models corresponding to the storage transaction ID carried in the second request, the second response may include the model that the third network element is authorized to obtain and that is included in the models corresponding to the storage transaction ID, and/or an address of the model in the first network element. Alternatively, if the third network element is not authorized to obtain all models corresponding to the storage transaction ID carried in the second request, the second response may be used to reject the second request.

When the third network element in this embodiment of this application retrieves/obtains a model by using a Storage transaction ID, after receiving the Storage transaction ID, the first network element returns, to the third network element, only a model that the third network element is authorized to obtain and that is included in models corresponding to the Storage transaction ID; or rejects a request from the third network element when the third network element is not authorized to obtain all models corresponding to the Storage transaction ID. In this way, processing logic used after the ADRF side receives the Storage transaction ID is pinpointed, and the solution is optimized.

The foregoing describes in detail the method in this application. To better implement the foregoing solutions in embodiments of this application, embodiments of this application further provide a corresponding apparatus or device.

In embodiments of this application, functional modules of the network elements in this application may be divided based on the foregoing method examples, and functional modules of the foregoing network elements are also divided based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. The following describes in detail communication apparatuses in embodiments of this application with reference to FIG. 10 to FIG. 12.

FIG. 10 is a diagram of a structure of a communication apparatus according to an embodiment of this application. As shown in FIG. 10, the communication apparatus includes a transceiver unit 10 and a processing unit 20. Optionally, the communication apparatus further includes a storage unit 30. The transceiver unit 10 may implement a corresponding communication function, the processing unit 20 is configured to perform data processing, and the storage unit 30 is configured to store information or data. For example, the transceiver unit 10 may also be referred to as a communication interface or a communication unit.

In some embodiments of this application, the communication apparatus may be the first network element described above. To be specific, the communication apparatus shown in FIG. 10 may be configured to perform the steps, functions, or the like performed by the first network element in the foregoing method embodiments. For example, the communication apparatus may be the first network element or a chip, a functional module, or the like configured in the first network element. This is not limited in embodiments of this application. The transceiver unit 10 is configured to perform a transmitting/receiving-related operation of the first network element in the foregoing method embodiments, the processing unit 20 is configured to perform a processing-related operation of the first network element in the foregoing method embodiments, and the storage unit 30 is configured to perform a storage-related operation of the first network element in the foregoing method embodiments.

For example, the transceiver unit 10 is configured to receive a first request from a second network element, where the first request is used to request to store a model, the first request includes an NF instance identifier of the second network element, and the first request does not include an allowed NFc list corresponding to the model. The processing unit 20 is configured to generate an allowed NFc list for the model, where the allowed NFc list includes the NF instance identifier of the second network element, and the NF instance identifier of the second network element that is included in the allowed NFc list is used for authorization for the model. The transceiver unit 10 is further configured to send a first response to the first request to the second network element.

For example, the first request further includes a model identifier of the model. The storage unit 30 is configured to store the NF instance identifier of the second network element, the allowed NFc list generated by the processing unit 20, and the model identifier.

For example, the transceiver unit 10 is further configured to: receive a second request, where the second request is used to request to obtain the model; and when an NF instance identifier carried in the second request is in the allowed NFc list, send a second response to the second request, where the second response carries information about the stored model in the first network element.

For example, the processing unit 20 is further configured to reject the second request when the NF instance identifier carried in the second request is not in the allowed NFc list.

For example, the first request further includes first indication information, and the first indication information indicates that the second network element does not authorize another network element to obtain the model.

For example, the processing unit 20 is further configured to determine, on a basis that the first request does not include the allowed NFc list corresponding to the model, that the second network element does not authorize another network element to obtain the model.

For example, the transceiver unit 10 is further configured to send a third request to an NRF network element, where the third request is used to notify the NRF network element of an NF profile of the first network element or register the NF profile of the first network element with the NRF network element, the third request includes second indication information, and the second indication information indicates that when an allowed NFc list corresponding to a model does not exist, another network element cannot obtain the model.

For example, that the first request does not include an allowed NFc list corresponding to the model indicates that the second network element does not authorize another network element to obtain the model.

For example, the transceiver unit 10 is further configured to receive a fourth request, where the fourth request is used to request to update or delete the model, and the fourth request includes an NF instance identifier. The processing unit 20 is further configured to process the model based on the fourth request if the NF instance identifier carried in the fourth request is the NF instance identifier of the second network element.

In this embodiment of this application, for specific descriptions of the first request, the first response, the second request, the second response, the third request, the fourth request, the network elements, and the like, refer to Embodiment 1. Details are not described herein.

It may be understood that specific descriptions of the transceiver unit and the processing unit shown in this embodiment of this application are merely examples. For specific functions, steps, or the like of the transceiver unit and the processing unit, refer to Embodiment 1. Details are not described herein. In addition, for a technical effect of this embodiment of this application, refer to the technical effect in Embodiment 1. For brevity, details are not described herein.

For example, the transceiver unit 10 is configured to receive a first request from a second network element, where the first request is used to request to store a model, the first request includes a model identifier of the model and a network function NF instance identifier of the second network element, and the first request does not include an allowed NFc list corresponding to the model. The storage unit 30 is configured to store the NF instance identifier of the second network element and the model identifier. The transceiver unit 10 is further configured to send a first response to the first request to the second network element. The transceiver unit 10 is further configured to receive a second request, where the second request is used to request to obtain the model. The transceiver unit 10 is further configured to send a second response to the second request when an NF instance identifier carried in the second request is the stored NF instance identifier of the second network element, where the second response carries information about the stored model in the first network element.

For example, the processing unit 20 is configured to generate the first response and the second response.

For example, the processing unit 20 is further configured to reject the second request when the NF instance identifier carried in the second request is not the stored NF instance identifier of the second network element.

For example, the processing unit 20 is further configured to generate an allowed NFc list for the model, where the allowed NFc list is empty.

For example, the first request further includes first indication information, and the first indication information indicates that the second network element does not authorize another network element to obtain the model.

For example, the processing unit 20 is further configured to determine, on a basis that the first request does not include the allowed NFc list corresponding to the model, that the second network element does not authorize another network element to obtain the model.

For example, the transceiver unit 10 is further configured to send a third request to an NRF network element, where the third request is used to notify the NRF network element of an NF profile of the first network element or register the NF profile of the first network element with the NRF network element, the third request includes second indication information, and the second indication information indicates that when an allowed NFc list corresponding to a model does not exist, another network element cannot obtain the model.

For example, that the first request does not include an allowed NFc list corresponding to the model indicates that the second network element does not authorize another network element to obtain the model.

For example, the transceiver unit 10 is further configured to receive a fourth request, where the fourth request is used to request to update or delete the model, and the fourth request includes an NF instance identifier. The processing unit 20 is further configured to process the model based on the fourth request if the NF instance identifier carried in the fourth request is the NF instance identifier of the second network element.

In this embodiment of this application, for specific descriptions of the first request, the first response, the second request, the second response, the third request, the fourth request, the network elements, and the like, refer to Embodiment 2. Details are not described herein.

It may be understood that specific descriptions of the transceiver unit and the processing unit shown in this embodiment of this application are merely examples. For specific functions, steps, or the like of the transceiver unit and the processing unit, refer to Embodiment 2. Details are not described herein. In addition, for a technical effect of this embodiment of this application, refer to the technical effect in Embodiment 2. For brevity, details are not described herein.

For example, the transceiver unit 10 is configured to receive a first request from a second network element, where the first request is used to request to store a model, the first request includes a model identifier of the model and indication information, and the indication information indicates that the second network element authorizes all network elements to obtain the model. The transceiver unit 10 is further configured to send a first response to the first request to the second network element. The transceiver unit 10 is further configured to receive a second request from a third network element, where the second request is used to request to obtain the model. The transceiver unit 10 is further configured to send, based on the indication information, a second response to the second request to the third network element, where the second response carries information about the stored model in the first network element.

For example, the processing unit 20 is configured to generate the first response and the second response.

For example, the storage unit 30 is configured to store the model identifier and the indication information.

For example, the transceiver unit 10 is specifically configured to send the second response to the second request to the third network element if the model identifier or the storage transaction identifier carried in the second request corresponds to the indication information.

For example, the first request further includes an allowed NFc list corresponding to the model, and the indication information is in the allowed NFc list.

For example, the first request further includes a network function NF instance identifier of the second network element. The transceiver unit 10 is further configured to receive a fourth request from the second network element, where the fourth request is used to request to update or delete the model, and the fourth request includes an NF instance identifier. The processing unit 20 is further configured to process the model based on the fourth request if the NF instance identifier carried in the fourth request is the NF instance identifier of the second network element.

In this embodiment of this application, for specific descriptions of the first request, the first response, the second request, the second response, the fourth request, the network elements, and the like, refer to Embodiment 3. Details are not described herein.

It may be understood that specific descriptions of the transceiver unit and the processing unit shown in this embodiment of this application are merely examples. For specific functions, steps, or the like of the transceiver unit and the processing unit, refer to Embodiment 3. Details are not described herein. In addition, for a technical effect of this embodiment of this application, refer to the technical effect in Embodiment 3. For brevity, details are not described herein.

For example, the transceiver unit 10 is configured to receive a first request sent by a second network element, where the first request is used to request to store a model, and the first request includes a model ID of the model and an NF instance ID of the second network element. The processing unit 20 is configured to determine, on a basis that the first request does not include an allowed NFc list corresponding to a model A, that the second network element authorizes all network elements to obtain the model. The transceiver unit 10 is further configured to send a first response to the second network element, where the first response includes the model ID of the model, or the first response includes the model ID and a storage transaction ID of the model.

For example, the transceiver unit 10 is further configured to receive a second request, where the second request is used to request to obtain the model, and the second request includes the model ID or the storage transaction ID of the model. The transceiver unit 10 is further configured to send a second response to a third network element when the model ID or the storage transaction ID carried in the second request does not have a corresponding allowed NFc list, where the second response carries information about the stored model in a first network element.

For example, the transceiver unit 10 is further configured to receive a fourth request from the second network element, where the fourth request is used to request to update or delete the model, and the fourth request includes an NF instance identifier. The processing unit 20 is further configured to process the model based on the fourth request if the NF instance identifier carried in the fourth request is the NF instance identifier of the second network element.

In this embodiment of this application, for specific descriptions of the first request, the first response, the second request, the second response, the fourth request, the network elements, and the like, refer to Embodiment 4. Details are not described herein.

It may be understood that specific descriptions of the transceiver unit and the processing unit shown in this embodiment of this application are merely examples. For specific functions, steps, or the like of the transceiver unit and the processing unit, refer to Embodiment 4. Details are not described herein. In addition, for a technical effect of this embodiment of this application, refer to the technical effect in Embodiment 4. For brevity, details are not described herein.

For example, the transceiver unit 10 is further configured to receive a second request, where the second request is used to request to obtain a model, and the second request includes a storage transaction ID of the model. The transceiver unit 10 is configured to send a second response to a third network element.

If a model that the third network element is authorized to obtain exists in models corresponding to the storage transaction ID carried in the second request, the second response may include the model that the third network element is authorized to obtain and that is included in the models corresponding to the storage transaction ID, and/or an address of the model in the first network element. In other cases, the second response is used to reject the second request. For example, if the third network element is not authorized to obtain all models corresponding to the storage transaction ID carried in the second request, the second response may be used to reject the second request.

In this embodiment of this application, for specific descriptions of the second request, the second response, the network elements, and the like, refer to Embodiment 7. Details are not described herein.

It may be understood that specific descriptions of the transceiver unit and the processing unit shown in this embodiment of this application are merely examples. For specific functions, steps, or the like of the transceiver unit and the processing unit, refer to Embodiment 7. Details are not described herein. In addition, for a technical effect of this embodiment of this application, refer to the technical effect in Embodiment 7. For brevity, details are not described herein.

FIG. 10 is reused. In some embodiments of this application, the communication apparatus may be the second network element described above. To be specific, the communication apparatus shown in FIG. 10 may be configured to perform the steps, functions, or the like performed by the second network element in the foregoing method embodiments. For example, the communication apparatus may be the second network element or a chip, a functional module, or the like configured in the second network element. This is not limited in embodiments of this application. The transceiver unit 10 is configured to perform a transmitting/receiving-related operation of the second network element in the foregoing method embodiments, and the processing unit 20 is configured to perform a processing-related operation of the second network element in the foregoing method embodiments.

For example, the processing unit 20 is configured to determine a second model based on a first model. The transceiver unit 10 is configured to send a storage request to the first network element, where the storage request is used to request to store the second model in the first network element, the storage request includes an allowed NFc list corresponding to the second model, and the allowed NFc list corresponding to the second model is determined based on an allowed NFc list corresponding to the first model.

For example, the processing unit 20 is specifically configured to re-provide the second model based on accuracy of the first model.

For example, the processing unit 20 is specifically configured to perform retraining based on the first model to obtain the second model.

For example, the allowed NF consumer list corresponding to the second model is the same as the allowed NF consumer list corresponding to the first model.

In this embodiment of this application, for specific descriptions of a first storage request, a second storage request, the network elements, and the like, refer to Embodiment 5. Details are not described herein.

It may be understood that specific descriptions of the transceiver unit and the processing unit shown in this embodiment of this application are merely examples. For specific functions, steps, or the like of the transceiver unit and the processing unit, refer to Embodiment 5. Details are not described herein. In addition, for a technical effect of this embodiment of this application, refer to the technical effect in Embodiment 5. For brevity, details are not described herein.

For example, the transceiver unit 10 is configured to receive a model provision request from a third network element, where the model provision request includes an analytics identifier, and the model provision request is used to request the second network element to provide models corresponding to the analytics identifier. The transceiver unit 10 is further configured to send a model provision response to the third network element. When a model that is in the models corresponding to the analytics identifier and that the third network element is authorized to obtain has a storage transaction identifier, and the third network element is authorized to obtain all models corresponding to the storage transaction identifier, the model provision response includes the storage transaction identifier. Alternatively, when the model that is in the models corresponding to the analytics identifier and that the third network element is authorized to obtain has a storage transaction identifier, and the models corresponding to the storage transaction identifier include a model that the third network element is not authorized to obtain, the model provision response includes a model identifier of the model that is in the models corresponding to the analytics identifier and that the third network element is authorized to obtain.

For example, the processing unit 20 is configured to generate the model provision response. For another example, the processing unit 20 is configured to control the transceiver unit 10 to receive the model provision request and send the model provision response.

In this embodiment of this application, for specific descriptions of the model provision request, the model provision response, the network elements, and the like, refer to Embodiment 6. Details are not described herein.

It may be understood that specific descriptions of the transceiver unit and the processing unit shown in this embodiment of this application are merely examples. For specific functions, steps, or the like of the transceiver unit and the processing unit, refer to Embodiment 6. Details are not described herein. In addition, for a technical effect of this embodiment of this application, refer to the technical effect in Embodiment 6. For brevity, details are not described herein.

For example, the transceiver unit 10 is configured to send a first request to a first network element, where the first request is used to request to store a model, the first request includes a model identifier of the model and indication information, and the indication information indicates that a second network element authorizes all network elements to obtain the model. The transceiver unit 10 is further configured to receive a first response from the first network element.

For example, the first response includes the model identifier and a storage transaction identifier corresponding to the model.

For example, the transceiver unit 10 is configured to receive a model provision request from a third network element, where the model provision request includes an analytics identifier of the model, and the model provision request is used to request the second network element to provide the model. The transceiver unit 10 is further configured to send a model provision response to the third network element. When a model that is in models corresponding to the analytics identifier and that the third network element is authorized to obtain has a storage transaction identifier, and the third network element is authorized to obtain all models corresponding to the storage transaction identifier, the model provision response includes the storage transaction identifier. Alternatively, when the model that is in the models corresponding to the analytics identifier and that the third network element is authorized to obtain has a storage transaction identifier, and the models corresponding to the storage transaction identifier include a model that the third network element is not authorized to obtain, the model provision response includes the model identifier of the model.

For example, the processing unit 20 is configured to generate the first request and the model provision request.

For example, the first request further includes an allowed NFc list corresponding to the model, and the indication information is in the allowed NFc list.

In this embodiment of this application, for specific descriptions of the first request, the first response, the model provision request, the model provision response, the network elements, and the like, refer to Embodiment 3. Details are not described herein.

It may be understood that specific descriptions of the transceiver unit and the processing unit shown in this embodiment of this application are merely examples. For specific functions, steps, or the like of the transceiver unit and the processing unit, refer to Embodiment 3. Details are not described herein. In addition, for a technical effect of this embodiment of this application, refer to the technical effect in Embodiment 3. For brevity, details are not described herein.

The communication apparatus in embodiments of this application is described above, and possible product forms of the communication apparatus are described below. It should be understood that a product in any form that has a function of the communication apparatus in FIG. 10 falls within the protection scope of embodiments of this application. It should be further understood that the following descriptions are merely examples, and the product form of the communication apparatus in embodiments of this application is not limited thereto.

In a possible implementation, in the communication apparatus shown in FIG. 10, the processing unit 20 may be one or more processors, the transceiver unit 10 may be a transceiver, or the transceiver unit 10 may be a sending unit and a receiving unit, the sending unit may be a transmitter, the receiving unit may be a receiver, and the sending unit and the receiving unit are integrated into one device, for example, a transceiver. In this embodiment of this application, the processor and the transceiver may be coupled or the like, and a connection mode between the processor and the transceiver is not limited in embodiments of this application. In a process of performing the foregoing method, a process of sending information in the foregoing method can be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method can be understood as a process of receiving the input information by the processor. When the processor receives the information that is input, the transceiver receives the information and inputs the information into the processor. Further, after the transceiver receives the foregoing information, other processing may need to be performed on the foregoing information before the information is input into the processor.

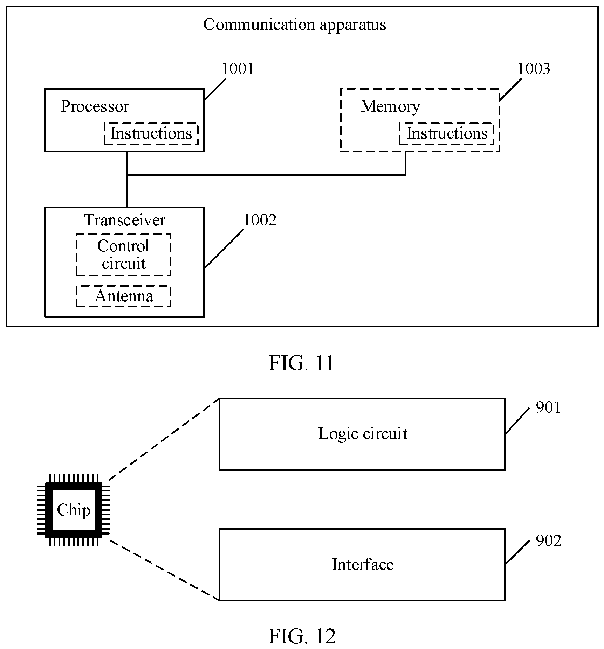

FIG. 11 is another diagram of a structure of a communication apparatus according to an embodiment of this application. As shown in FIG. 11, the communication apparatus provided in this embodiment of this application may be configured to implement the method described in the foregoing method embodiments. For details, refer to the descriptions in the foregoing method embodiments. The communication apparatus may be the first network element, the second network element, or a chip or circuit in the first network element or the second network element. For example, the communication apparatus includes one or more processors 1001 and a transceiver 1002. The communication apparatus may further include a memory 1003. In an implementation, the communication apparatus further includes an input/output apparatus (not shown).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

When the communication apparatus is turned on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

For example, when the communication apparatus is configured to perform steps, methods, or functions performed by the first network element in Embodiment 1, the processor 1001 may be configured to perform step S102, step S105, and step S108 in FIG. 3, and/or configured to perform another process of the technology described in this specification. The transceiver 1002 may be configured to perform step S103 and step S106 in FIG. 3, and/or configured to perform another process of the technology described in this specification.

For example, when the communication apparatus is configured to perform steps, methods, or functions performed by the second network element in Embodiment 1, the processor 1001 may be configured to generate the first request, the second request, and the fourth request, and/or configured to perform another process of the technology described in this specification. The transceiver 1002 may be configured to perform step S101, step S104, and step S107 in FIG. 3, and/or configured to perform another process of the technology described in this specification.

For example, when the communication apparatus is configured to perform steps, methods, or functions performed by the first network element in Embodiment 2, the processor 1001 may be configured to perform step S205 and step S208 in FIG. 4, and/or configured to perform another process of the technology described in this specification. The transceiver 1002 may be configured to perform step S203 and step S206 in FIG. 4, and/or configured to perform another process of the technology described in this specification. The memory 1003 may be configured to perform step S202 in FIG. 4, and/or configured to perform another process of the technology described in this specification.

For example, when the communication apparatus is configured to perform steps, methods, or functions performed by the second network element in Embodiment 2, the processor 1001 may be configured to generate the first request, the second request, and the fourth request, and/or configured to perform another process of the technology described in this specification. The transceiver 1002 may be configured to perform step S201, step S204, and step S207 in FIG. 4, and/or configured to perform another process of the technology described in this specification.

For example, when the communication apparatus is configured to perform steps, methods, or functions performed by the first network element in Embodiment 3, the processor 1001 may be configured to perform step S309 in FIG. 5, and/or configured to perform another process of the technology described in this specification. The transceiver 1002 may be configured to perform step S303 and step S307 in FIG. 5, and/or configured to perform another process of the technology described in this specification. The memory 1003 may be configured to perform step S302 in FIG. 4, and/or configured to perform another process of the technology described in this specification.

For example, when the communication apparatus is configured to perform steps, methods, or functions performed by the second network element in Embodiment 3, the processor 1001 may be configured to generate the first request, the fourth request, and the model provision response, and/or configured to perform another process of the technology described in this specification. The transceiver 1002 may be configured to perform step S301, step S305, and step S308 in FIG. 5, and/or configured to perform another process of the technology described in this specification.

For example, when the communication apparatus is configured to perform steps, methods, or functions performed by the third network element in Embodiment 3, the processor 1001 may be configured to generate the model provision request and the second request, and/or configured to perform another process of the technology described in this specification. The transceiver 1002 may be configured to perform step S304 and step S306 in FIG. 5, and/or configured to perform another process of the technology described in this specification.

For example, when the communication apparatus is configured to perform steps, methods, or functions performed by the first network element in Embodiment 4, the processor 1001 may be configured to perform step S402 and step S410 in FIG. 6, and/or configured to perform another process of the technology described in this specification. The transceiver 1002 may be configured to perform step S404 and step S408 in FIG. 6, and/or configured to perform another process of the technology described in this specification. The memory 1003 may be configured to perform step S403 in FIG. 4, and/or configured to perform another process of the technology described in this specification.

For example, when the communication apparatus is configured to perform steps, methods, or functions performed by the second network element in Embodiment 4, the processor 1001 may be configured to generate the first request, the fourth request, and the model provision response, and/or configured to perform another process of the technology described in this specification. The transceiver 1002 may be configured to perform step S401, step S406, and step S409 in FIG. 6, and/or configured to perform another process of the technology described in this specification.

For example, when the communication apparatus is configured to perform steps, methods, or functions performed by the third network element in Embodiment 4, the processor 1001 may be configured to generate the model provision request and the second request, and/or configured to perform another process of the technology described in this specification. The transceiver 1002 may be configured to perform step S405 and step S407 in FIG. 6, and/or configured to perform another process of the technology described in this specification.

For example, when the communication apparatus is configured to perform steps, methods, or functions performed by the second network element in Embodiment 5, the processor 1001 may be configured to perform step S501 in FIG. 7, and/or configured to perform another process of the technology described in this specification. The transceiver 1002 may be configured to perform step S502 in FIG. 7, and/or configured to perform another process of the technology described in this specification.

For example, when the communication apparatus is configured to perform steps, methods, or functions performed by the second network element in Embodiment 6, the processor 1001 may be configured to generate the model provision response, and/or configured to perform another process of the technology described in this specification. The transceiver 1002 may be configured to perform step S602 in FIG. 8, and/or configured to perform another process of the technology described in this specification.

For example, when the communication apparatus is configured to perform steps, methods, or functions performed by the third network element in Embodiment 6, the processor 1001 may be configured to generate the model provision request, and/or configured to perform another process of the technology described in this specification. The transceiver 1002 may be configured to perform step S601 in FIG. 8, and/or configured to perform another process of the technology described in this specification.

For example, when the communication apparatus is configured to perform steps, methods, or functions performed by the first network element in Embodiment 7, the processor 1001 may be configured to generate the second response, and/or configured to perform another process of the technology described in this specification. The transceiver 1002 may be configured to perform step S702 in FIG. 9, and/or configured to perform another process of the technology described in this specification.

For example, when the communication apparatus is configured to perform steps, methods, or functions performed by the third network element in Embodiment 7, the processor 1001 may be configured to generate the second request, and/or configured to perform another process of the technology described in this specification. The transceiver 1002 may be configured to perform step S701 in FIG. 8, and/or configured to perform another process of the technology described in this specification.

In any one of the foregoing implementations, the processor 1001 may include a transceiver configured to implement a receiving function and a sending function. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to perform transmission or transfer of a signal.

In any one of the foregoing implementations, the processor 1001 may store instructions, and the instructions may be a computer program. The computer program is run on the processor 1001, to enable the communication apparatus to perform the method described in the foregoing method embodiments. The computer program may be built in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application can be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, such as a complementary metal oxide semiconductor (complementary metal oxide semiconductor, CMOS), an N-type metal oxide semiconductor (N-type metal oxide semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may alternatively have more components and the like than those in FIG. 11. This is not limited in this embodiment of this application. The foregoing methods performed by the processor and the transceiver are merely examples. For specific steps performed by the processor and the transceiver, refer to the descriptions in the foregoing method embodiments.

In another possible implementation, in the communication apparatus shown in FIG. 10, the processing unit 20 may be one or more logic circuits, and the transceiver unit 10 may be an input/output interface, or referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 12 is still another diagram of a structure of a communication apparatus according to an embodiment of this application. As shown in FIG. 12, the communication apparatus shown in FIG. 12 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 12 shows an example in which the communication apparatus is a chip. The chip includes the logic circuit 901 and the interface 902.

In this embodiment of this application, the logic circuit and the interface may be coupled to each other. A specific manner of connection between the logic circuit and the interface is not limited in this embodiment of this application.

For example, the communication apparatus shown in FIG. 12 may be configured to implement the method described in the foregoing method embodiments. For details, refer to the descriptions in the foregoing method embodiments. The communication apparatus may be any one of the first network element, the second network element, or the third network element.

It may be understood that the communication apparatus shown in this embodiment of this application may implement, in a form of hardware, the method provided in embodiments of this application, or the like, or may implement, in a form of software, the method provided in embodiments of this application. This is not limited in embodiments of this application.

For specific implementations of embodiments shown in FIG. 12, refer to the foregoing embodiments. Details are not described herein.

An embodiment of this application further provides a communication system. The communication system includes at least two of a first network element, a second network element, and a third network element. The at least two of the first network element, the second network element, and the third network element may be configured to perform the method in the foregoing method embodiments.

In addition, this application further provides a computer program, and the computer program is used to implement operations and/or processing performed by the first network element in the method provided in this application.

This application further provides a computer program. The computer program is configured to implement operations and/or processing performed by the second network element in the method provided in this application.

This application further provides a computer program. The computer program is configured to implement operations and/or processing performed by the third network element in the method provided in this application.

This application further provides a computer-readable storage medium. The computer-readable storage medium stores computer code. When the computer code is run on a computer, the computer is enabled to perform operations and/or processing performed by the first network element in the method provided in this application.

This application further provides a computer-readable storage medium. The computer-readable storage medium stores computer code. When the computer code is run on a computer, the computer is enabled to perform operations and/or processing performed by the second network element in the method provided in this application.

This application further provides a computer-readable storage medium. The computer-readable storage medium stores computer code. When the computer code is run on a computer, the computer is enabled to perform operations and/or processing performed by the third network element in the method provided in this application.

This application further provides a computer program product. The computer program product includes computer code or a computer program. When the computer code or the computer program is run on a computer, operations and/or processing performed by the first network element in the method provided in this application are/is performed.

This application further provides a computer program product. The computer program product includes computer code or a computer program. When the computer code or the computer program is run on a computer, operations and/or processing performed by the second network element in the method provided in this application are/is performed.

This application further provides a computer program product. The computer program product includes computer code or a computer program. When the computer code or the computer program is run on a computer, operations and/or processing performed by the third network element in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located at one location, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information exchange method, comprising:
receiving, by a first network element, a first request from a second network element, wherein the first request is used to request to store a model, the first request comprises a model identifier of the model and a network function NF instance identifier of the second network element, and the first request does not comprise an allowed NF consumer list corresponding to the model;
storing, by the first network element, the NF instance identifier of the second network element and the model identifier;
sending, by the first network element, a first response to the first request to the second network element;
receiving, by the first network element, a second request, wherein the second request is used to request to obtain the model; and
when the first network element verifies that an NF instance identifier carried in the second request is the stored NF instance identifier of the second network element, sending, by the first network element, a second response to the second request, wherein the second response carries information about the stored model in the first network element.

2. The method according to claim 1, wherein the first network element is an analytics data repository function network element, and the second network element is a network data analytics function network element containing model training logical function.

3. The method according to claim 1 or 2, wherein after receiving, by the first network element, the first request, the method further comprises:
determining, by the first network element on a basis that the first request does not comprise the allowed NF consumer list, that only the second network element is allowed to obtain the model.

4. The method according to any one of claims 1 to 3, wherein the information about the stored model in the first network element comprises a storage address of the model in the first network element.

5. The method according to any one of claims 1 to 4, wherein the information about the stored model in the first network element comprises a model file of the model.

6. The method according to any one of claims 1 to 5, wherein that the first request does not comprise the allowed NF consumer list corresponding to the model indicates that the second network element does not authorize another network element to obtain the model.

7. An information exchange method, comprising:
sending, by a second network element, a first request to a first network element, wherein the first request is used to request to store a model, the first request comprises a model identifier of the model and a network function NF instance identifier of the second network element, and the first request does not comprise an allowed NF consumer list corresponding to the model;
storing, by the first network element, the NF instance identifier of the second network element and the model identifier;
sending, by the first network element, a first response to the first request to the second network element;
sending, by the second network element, a second request to the first network element, wherein the second request is used to request to obtain the model;
verifying, by the first network element, whether an NF instance identifier carried in the second request is the stored NF instance identifier of the second network element; and
when the first network element verifies that the NF instance identifier carried in the second request is the stored NF instance identifier of the second network element, sending, by the first network element, a second response to the second request, wherein the second response carries information about the stored model in the first network element.

8. The method according to claim 7, wherein the first network element is an analytics data repository function network element, and the second network element is a network data analytics function network element containing model training logical function.

9. The method according to claim 7 or 8, wherein after sending, by the second network element, the first request to the first network element, the method further comprises:
determining, by the first network element on a basis that the first request does not comprise the allowed NF consumer list, that only the second network element is allowed to obtain the model.

10. The method according to any one of claims 7 to 9, wherein the information about the stored model in the first network element comprises a storage address of the model in the first network element.

11. The method according to any one of claims 7 to 10, wherein the information about the stored model in the first network element comprises a model file of the model.

12. The method according to any one of claims 7 to 11, wherein that the first request does not comprise the allowed NF consumer list corresponding to the model indicates that the second network element does not authorize another network element to obtain the model.

13. A communication apparatus, comprising a unit or module configured to perform the method according to any one of claims 1 to 6.

14. A program product comprising instructions, wherein when the instructions are run, the method according to any one of claims 1 to 6 is performed.

15. A communication apparatus, comprising:
one or more processors, wherein the one or more processors are coupled to one or more memories, wherein
the one or more memories are configured to store a computer program, and the one or more processors are configured to execute the computer program stored in the one or more memories, to enable the communication apparatus to perform the method according to any one of claims 1 to 6.

16. An information exchange method, comprising:
receiving, by a first network element, a first request from a second network element, wherein the first request is used to request to store a model, the first request comprises a network function NF instance identifier of the second network element, and the first request does not comprise an allowed NF consumer list corresponding to the model;
generating, by the first network element, an allowed NF consumer list for the model, wherein the allowed NF consumer list comprises the NF instance identifier of the second network element, and the NF instance identifier of the second network element that is comprised in the allowed NF consumer list is used for authorization for the model; and
sending, by the first network element, a first response to the first request to the second network element.

17. The method according to claim 16, wherein the first request further comprises a model identifier of the model; and
the method further comprises: storing, by the first network element, the NF instance identifier of the second network element, the allowed NF consumer list, and the model identifier.

18. The method according to claim 16 or 17, wherein the method further comprises:
receiving, by the first network element, a second request, wherein the second request is used to request to obtain the model; and
when an NF instance identifier carried in the second request is in the allowed NF consumer list, sending, by the first network element, a second response to the second request, wherein the second response carries information about the model.

19. The method according to claim 18, wherein the method further comprises: rejecting, by the first network element, the second request when the NF instance identifier carried in the second request is not in the allowed NF consumer list.

20. The method according to any one of claims 16 to 19, wherein the first request further comprises first indication information, and the first indication information indicates that the second network element does not authorize another network element to obtain the model.

21. The method according to any one of claims 16 to 20, wherein the method further comprises:
determining, by the first network element on a basis that the first request does not comprise the allowed NF consumer list corresponding to the model, that the second network element does not authorize another network element to obtain the model.

22. The method according to claim 21, wherein before receiving, by the first network element, the first request from the second network element, the method further comprises:
sending, by the first network element, a third request to a network repository function NRF network element, wherein the third request is used to notify the NRF network element of an NF profile of the first network element, the third request comprises second indication information, and the second indication information indicates that when an allowed network function NF consumer list corresponding to a model does not exist, another network element cannot obtain the model.

23. The method according to claim 21, wherein that the first request does not comprise the allowed NF consumer list corresponding to the model indicates that the second network element does not authorize another network element to obtain the model.

24. The method according to any one of claims 16 to 23, wherein after sending, by the first network element, the first response to the first request to the second network element, the method further comprises:
receiving, by the first network element, a fourth request, wherein the fourth request is used to request to update or delete the model, and the fourth request comprises an NF instance identifier; and
if the NF instance identifier carried in the fourth request is the NF instance identifier of the second network element, processing, by the first network element, the model based on the fourth request.

25. The method according to any one of claims 16 to 24, wherein the first network element is an analytics data repository function ADRF network element, and the second network element is a network data analytics function NWDAF network element containing model training logical function MTLF.

26. An information exchange method, comprising:
receiving, by a second network element, a model provision request from a third network element, wherein the model provision request comprises an analytics identifier, the model provision request is used to request to provide first models corresponding to the analytics identifier, and the analytics identifier corresponds to a storage transaction identifier; and
sending, by the second network element, a model provision response to the third network element, wherein
when the third network element is authorized to obtain all second models corresponding to the storage transaction identifier, the model provision response comprises the storage transaction identifier; or
when the third network element is not authorized to obtain all second models corresponding to the storage transaction identifier, the model provision response does not comprise the storage transaction identifier.

27. The method according to claim 26, wherein that the analytics identifier corresponds to the storage transaction identifier comprises that a model that is in the first models corresponding to the analytics identifier and that the third network element is authorized to obtain has a storage transaction identifier.

28. The method according to claim 26 or 27, wherein the second network element is a network data analytics function NWDAF network element containing model training logical function MTLF, and the third network element is an NWDAF network element containing analytics logical function AnLF.

29. The method according to any one of claims 26 to 28, wherein that the model provision response does not comprise the storage transaction identifier is specifically that the model provision response comprises a model identifier of the model that is in the first models corresponding to the analytics identifier and that the third network element is authorized to obtain.

30. A communication apparatus, comprising a unit or module configured to perform the method according to any one of claims 16 to 29.

31. A readable storage medium, wherein the readable storage medium stores program instructions, and when the program instructions are run on a communication apparatus, the communication apparatus is enabled to perform the method according to any one of claims 1 to 6 or the method according to any one of claims 16 to 29.

32. A communication system, wherein the communication system comprises the second network element and the first network element that is configured to perform the method according to any one of claims 1 to 12 or the method according to any one of claims 16 to 25; or the communication system comprises the third network element and the second network element that is configured to perform the method according to any one of claims 26 to 29.

33. A program product comprising instructions, wherein when the instructions are run, the method according to any one of claims 16 to 29 is performed.

34. A communication apparatus, comprising:
one or more processors, wherein the one or more processors are coupled to one or more memories, wherein
the one or more memories are configured to store a computer program, and the one or more processors are configured to execute the computer program stored in the one or more memories, to enable the communication apparatus to perform the method according to any one of claims 16 to 29.
